# EUROPEAN PATENT SPECIFICATION

(11) **EP 2 631 114 B1**
(45) Date of publication and mention of the grant of the patent: **08.04.2020**
(21) Application number: 11834460.5
(22) Date of filing: 20.10.2011
(51) Int. Cl.: B60N 2/02, H01H 3/14, B60R 21/015, B60N 2/00

(54) **SEAT OCCUPANCY SENSOR AND SEAT DEVICE USING SAME**
SITZBELEGUNGSSENSOR UND SITZVORRICHTUNG DAMIT
CAPTEUR D'OCCUPATION DE SIÈGE ET DISPOSITIF DE TYPE SIÈGE UTILISANT CELUI-CI

(30) Priority: 22.10.2010 JP 2010237633; 22.10.2010 JP 2010237631; 22.10.2010 JP 2010237223; 22.10.2010 JP 2010237222
(43) Date of publication of application: 28.08.2013
(73) Proprietor: Fujikura Ltd., Tokyo 135-8512 (JP)
(72) Inventor: NAKAZAKI Shigeru, Sakura-shi Chiba 285-8550 (JP)
(74) Representative: Grünecker Patent- und Rechtsanwälte PartG mbB
(86) International application number: PCT/JP2011/074225
(87) International publication number: WO 2012/053621

(56) References cited:
- EP-A2- 1 591 321
- DE-A1-102008 006 367
- JP-A- 2001 180 353
- JP-A- 2001 180 353
- JP-A- 2005 315 745
- JP-A- 2008 183 977
- JP-A- 2009 113 789
- JP-A- 2010 125 122
- JP-A- 2010 125 122
- US-A1- 2009 094 807

## Description

### Technical Field

The present invention relates to a seat occupancy sensor and a seat device using the same, and particularly, to a seat occupancy sensor capable of appropriately detecting sitting of a person while being placed on a seat pan and a seat device using the same.

### Background Art

Currently, as one of vehicle safety systems, an alarm system has been commercially used which detects wearing of a seat belt when a person gets on a vehicle and generates an alarm when the person does not wear the seat belt. The alarm system detects the sitting of the person and generates an alarm in a case where the person does not wear the seat belt when the person sits on a seat. For the detection of the sitting of the person, in some cases, a seat occupancy sensor is used which is disposed in a seat portion of a seat and detects sitting of a person by a load generated by the sitting.

Patent Document 1 discloses a seat occupancy sensor. The seat occupancy sensor disclosed in Patent Document 1 includes a plurality of on-off type pressure sensitive switches, and each pressure sensitive switch includes a pair of electrodes facing each other with a predetermined gap therebetween. The pair of electrodes is provided on surfaces of insulating sheets bonded to both surfaces of a sheet-like spacer, and faces each other through an opening formed in the spacer. Then, the seat occupancy sensor is disposed between a surface of a seat and a cushion pad. When a pressure is applied to the pressure sensitive switch by the sitting of the person, the insulating sheets are warped, so that the pair of electrodes contacts each other inside the opening and the pressure sensitive switch is turned on.

### Citation List

### Patent Document

[Patent Document 1] Japanese Patent Application Laid-Open No. 09-315199

Further prior art is known from document DE 10 2008 0063 67 A1.

### Summary of Invention

### Objects to be Achieved by the Invention

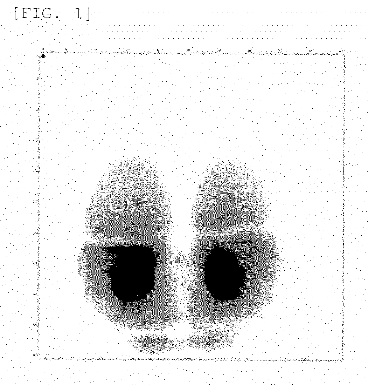

FIG. 1 is a diagram illustrating a distribution of a load which is applied from a person to a cushion pad of a seat through a surface skin while the person formally sits on the seat. In FIG. 1, the darker color portion indicates a state where a larger load is applied to the cushion pad. In a general seat, only a surface skin is interposed switches, and each pressure sensitive switch includes a pair of electrodes facing each other with a predetermined gap therebetween. The pair of electrodes is provided on surfaces of insulating sheets bonded to both surfaces of a sheet-like spacer, and faces each other through an opening formed in the spacer. Then, the seat occupancy sensor is disposed between a surface of a seat and a cushion pad. When a pressure is applied to the pressure sensitive switch by the sitting of the person, the insulating sheets are warped, so that the pair of electrodes contacts each other inside the opening and the pressure sensitive switch is turned on.

### Citation List

### Patent Document

[Patent Document 1] Japanese Patent Application Laid-Open No. 09-315199

### Summary of Invention

### Objects to be Achieved by the Invention

FIG. 1 is a diagram illustrating a distribution of a load which is applied from a person to a cushion pad of a seat through a surface skin while the person formally sits on the seat. In FIG. 1, the darker color portion indicates a state where a larger load is applied to the cushion pad. In a general seat, only a surface skin is interposed preventing a discomfort caused by such a seat occupancy sensor. As a result, a conclusion is obtained in which the seat occupancy sensor may be disposed below the cushion pad of the seat in order to prevent the discomfort caused by the seat occupancy sensor. When the seat occupancy sensor is disposed in this way, the cushion pad is interposed between the sitting person and the seat occupancy sensor, and hence it is possible to prevent the discomfort caused by the seat occupancy sensor when the person sits on the seat.

Therefore, the inventor has examined a case where a force is not applied from the lower side of the seat occupancy sensor even when a pressure is applied from the cushion pad to the upper side of the seat occupancy sensor. As such a case, there is a case in which the seat occupancy sensor is disposed between a member that is not deformed by a load applied thereto and the cushion pad and the lower side of the seat occupancy sensor becomes a space. For example, in a case where the seat occupancy sensor is disposed between the cushion pad and a member called the seat pan supporting the cushion pad, the seat pan is not deformed even when a load generated by the sitting of the person is applied thereto since the seat pan is a rigid structure generally formed of metal. Accordingly, in a case where the seat occupancy sensor is disposed on the seat pan, even when the pressure generated by the sitting is applied to the seat occupancy sensor, the seat pan side insulating sheet is not warped, but only the cushion pad side insulating sheet is warped, so that the pressure sensitive switch is turned on. Meanwhile, even in a case where the lower side of the seat occupancy sensor becomes a space, the space side insulating sheet is not warped, but only the cushion pad side insulating sheet is warped, so that the pressure sensitive switch is turned on. However, the inventor has found that the sitting of the person may not be appropriately detected compared to the case where the sitting is detected by the warpage of both the pair of insulating sheets. Therefore, the inventor has further carefully examined this problem and contrived the invention.

The object is solved by the subject matter of claim 1.

According to the seat occupancy sensor, when a pressure is applied to the seat occupancy sensor, the cushion member is deformed so as to be crushed, and presses the insulating sheet by the elastic force. At this time, the cushion member presses the insulating sheet so that the insulating sheet enters the opening of the spacer, so that the pair of electrodes is electrically connected to each other to thereby become an electrical connection state. Accordingly, in a case where the seat occupancy sensor is disposed on a member while the cushion member is interposed between the insulating sheet and the member below the cushion pad, even when the member is not deformed by the load, the insulating sheet may be warped by the cushion member when the person sits on the seat device. Further, in a case where the lower side of the place for disposing the seat occupancy sensor becomes a space, the seat occupancy sensor may be disposed while the cushion member is interposed between the cushion pad and the insulating sheet. When the components are arranged in this way, the space side insulating sheet is not warped. However, even when the cushion pad is comparatively hard, the cushion pad side insulating sheet may be appropriately warped by the cushion member. In this way, the sitting of the person may be appropriately detected.

Furthermore, in the specification, the cushion member is a member having a cushion property. Specifically, the member has an elastic force and is deformed to be crushed when a pressure is applied thereto.

Further, in the seat occupancy sensor, the cushion member may be formed of a resin including at least one of silicon and polyester.

Inside a vehicle such as an automobile, the temperature largely changes depending on the environment. However, according to the seat occupancy sensor, the cushion member is formed of a resin including at least one of silicon and polyester having an excellent temperature characteristic. For this reason, even when the seat occupancy sensor is disposed in the seat device of the automobile of which the temperature largely changes, a change in sitting detection load may be suppressed.

Further, in the seat occupancy sensor, a crushing thickness of the cushion member may be a half or more of a distance between the pair of electrodes.

According to the seat occupancy sensor, since the cushion member is just deformed to be crushed instead of warpage, the electrode provided on the placement member side insulating sheet for placing the seat occupancy sensor thereon may approach the other electrode by a half or more of the distance between the electrodes. Accordingly, the sitting of the person may be detected with high sensitivity.

Further, the cushion member may include a first cushion member that is provided on the opposite surface to the spacer side surface of any one insulating sheet of the pair of insulating sheets and covers at least a part of the opening through the insulating sheet, and a second cushion member which is provided on the opposite surface to the spacer side surface of the insulating sheet without the first cushion member and covers at least a part of the opening through the insulating sheet.

In this way, since the cushion member is provided at both sides of the pair of insulating sheets, the pair of insulating sheets may be appropriately warped even in a case where the seat occupancy sensor is disposed on a member that is not deformed by the load or the seat occupancy sensor is disposed on a member that is deformed by the load. Accordingly, it is possible to suppress a difference in the sitting detection load in response to the place for disposing the seat occupancy sensor.

Further, the spacer may be provided with the openings having at least two kinds or more of sizes.

The respective insulating sheets may not be easily warped as the opening interposed between the insulating sheets becomes smaller, so that the pair of electrodes facing each other through the opening may not be easily turned on. Incidentally, when the person sits on the cushion pad, there is a tendency that the pressure applied to the lower side of the cushion pad is not uniform. Accordingly, when a small opening is positioned at a place which is pressed by a large pressure, the electrodes may not be easily turned on at a place which receives a large pressure and may be easily turned on at a place which receives a small pressure. That is, a variation of the easiness of turning on the pair of electrodes and the pressure applied to the lower side of the cushion pad may be reduced by the size of the opening. As a result, even when the pressure applied to the lower side of the cushion pad is not uniform, the non-uniform pressure may be adjusted so that the sitting of the person may be further appropriately detected.

Further, a ratio in which the cushion member covers the opening may be different for each of different kinds of the openings.

In this way, when the ratio is set to be different, it is possible to adjust the easiness (the sensitivity of the switch) of turning on the pair of electrodes facing each other through the opening. Accordingly, even when there is a limitation in the arrangement place below the cushion pad, it is possible to improve the uniformity (balance) in which the switches are turned on.

Further, the seat device of the invention includes the seat occupancy sensor and the cushion pad.

According to the seat device, as described above, even in a case where the seat occupancy sensor is disposed on a member while the cushion member is interposed between the insulating sheet and the member below the cushion pad or the lower side of the place for disposing the seat occupancy sensor becomes a space, the sitting of the person may be appropriately detected.

Further, the seat device may further include a placement member that is provided below the cushion pad and places the seat occupancy sensor thereon, in which the seat occupancy sensor may be disposed between the placement member and the cushion pad while the cushion member is interposed between the placement member and the insulating sheet.

According to the seat device, since the seat occupancy sensor is disposed on the placement member below the cushion pad, the discomfort caused by the seat occupancy sensor may be prevented. Then, when the pressure is applied to the seat occupancy sensor due to the sitting of the person, the cushion member interposed between the placement member and the insulating sheet presses the placement member side insulating sheet, and the cushion pad presses the other insulating sheet. Accordingly, both insulating sheets may be appropriately warped, and hence the sitting of the person may be appropriately detected. Further, since the cushion member disposed between the placement member and the insulating sheet adjusts the height of the pressure sensitive switch from the seat pan, it is possible to suppress a noticeable increase in the load for turning on the pressure sensitive switch even when a gap is formed between the placement member and the cushion pad.

Further, the placement member may be a seat pan which supports the cushion pad, and the cushion member may be interposed between an upper surface of the seat pan and the insulating sheet. Alternatively, the placement member may be a pedestal which is attachable to and detachable from a part of a plurality of springs laid across a seat frame and places the seat occupancy sensor above the spring, and the cushion member may be interposed between a seat surface of the pedestal and the insulating sheet. Alternatively, the placement member may be a seat frame across which a plurality of springs are laid, and the cushion member may be interposed between an upper surface of the seat frame and the insulating sheet.

Further, in the seat device, an elastic force of the cushion member may be weaker than an elastic force of the cushion pad.

According to the seat device, it is possible to suppress the vibration generated from the seat pan from being transmitted to the pressure sensitive switch by the cushion member of which the elastic force is weaker than that of the cushion pad. Accordingly, the switch is further stably operated, and hence the sitting of the person may be stably detected.

Alternatively, in the seat device, the cushion member may have the same elastic force as that of the cushion pad.

When a pressure is applied to the seat occupancy sensor due to the sitting of the person, the seat occupancy sensor is pressed by the same pressure from the placement member and the cushion pad. Accordingly, according to the seat occupancy sensor, the same elastic force is applied from the cushion member and the cushion pad to the respective insulating sheets, so that the respective insulating sheets may be warped by the same amount. Accordingly, it is possible to suppress an increase in the warpage amount of one insulating sheet, and hence to improve the sitting detection sensitivity.

Moreover, in the seat device, the cushion member and the cushion pad may be formed of the same material.

Alternatively, in the seat device, an elastic force of the cushion member may be stronger than an elastic force of the cushion pad.

According to the seat device, since the cushion pad is further contracted compared to the cushion member when the person sits on the seat device, so that the contraction of the cushion member is suppressed. For this reason, it is possible to suppress a decrease in the distance from the placement member to the pressure sensitive switch. Accordingly, since the vibration or the heat transmitted from the placement member to the pressure sensitive switch may be further absorbed by the cushion member, it is possible to suppress a change in the pressure for turning on the pressure sensitive switch in accordance with a temperature, and hence to suppress a change in the load for detecting the sitting in accordance with a temperature.

### Effect of the Invention

As described above, according to the invention, provided are the seat occupancy sensor capable of appropriately detecting the sitting of the person while preventing the discomfort caused by the seat occupancy sensor and the seat device using the same.

### Brief Description of the Drawings

FIG. 1 is a diagram illustrating a distribution of a load which is applied from a person to a cushion pad of a seat through a surface skin while the person formally sits on the seat.
FIG. 2 is a plan view illustrating a seat occupancy sensor according to a first embodiment of the invention.
FIG. 3 is a plan view illustrating a first electrode sheet illustrated in FIG. 2.
FIG. 4 is a plan view illustrating a second electrode sheet illustrated in FIG. 2.
FIG. 5 is a plan view illustrating a spacer.
FIG. 6 is a diagram illustrating a state of a cross-section taken along line V-V of FIG. 2.
FIG. 7 is a circuit diagram illustrating a circuit configuration of the seat occupancy sensor illustrated in FIG. 2 by an equivalent circuit.
FIG. 8A is a diagram illustrating a state where the seat device provided with the seat occupancy sensor is viewed from the upside.
FIG. 8B is a diagram illustrating a state where the seat device provided with the seat occupancy sensor is viewed from the lateral side.
FIG. 9 is a conceptual diagram illustrating a distribution of a load which is applied from a person to the seat pan through a surface skin and a cushion pad while the person formally sits on the seat device.
FIG. 10 is a diagram illustrating a state where a pressure sensitive switch is turned on while the seat occupancy sensor is disposed inside the seat as illustrated in FIG. 8B from the same viewpoint as that of FIG. 6.
FIG. 11 is a plan view illustrating a seat occupancy sensor according to a second embodiment of the invention.
FIG. 12 is a plan view illustrating a first electrode sheet illustrated in FIG. 11.
FIG. 13 is a plan view illustrating a second electrode sheet illustrated in FIG. 11.
FIG. 14 is a plan view illustrating a seat occupancy sensor according to a third embodiment of the invention.
FIG. 15A illustrates the first electrode sheet of FIG. 14.
FIG. 15B illustrates the second electrode sheet of FIG. 14.
FIG. 15C illustrates the spacer.
FIG. 16A is a diagram illustrating a state where the seat device provided with the seat occupancy sensor is viewed from the upside.
FIG. 16B is a diagram illustrating a state where the seat device provided with the seat occupancy sensor is viewed from the lateral side.
FIG. 17 is a plan view illustrating a seat occupancy sensor according to a fourth embodiment of the invention.
FIG. 18A is a plan view illustrating a state where the pedestal is viewed from one surface.
FIG. 18B is a diagram illustrating a state of a cross-section taken along the line W-W of FIG. 18A.
FIG. 19A is a diagram illustrating a state where the seat device provided with the seat occupancy sensor is viewed from the upside.
FIG. 19B is a diagram illustrating a state where the seat device provided with the seat occupancy sensor is viewed from the lateral side.
FIG. 20 is a conceptual diagram illustrating a distribution of a load which is applied to a seat frame and a spring through a cushion pad when a person formally sits on the seat device of FIG. 19.
FIG. 21 is a diagram illustrating a state of a part of a seat device and a part of a seat occupancy sensor according to a fifth embodiment of the invention.
FIG. 22 is a diagram illustrating a seat occupancy sensor according to another embodiment from the same viewpoint as that of FIG. 6.
FIG. 23 is a schematic diagram provided to describe a relation between an electrode and a cushion pad.

### Embodiment of the Invention

Hereinafter, preferred embodiments of a seat occupancy sensor according to the invention and a seat device using the same will be described in detail by referring to the drawings.

### (First embodiment)

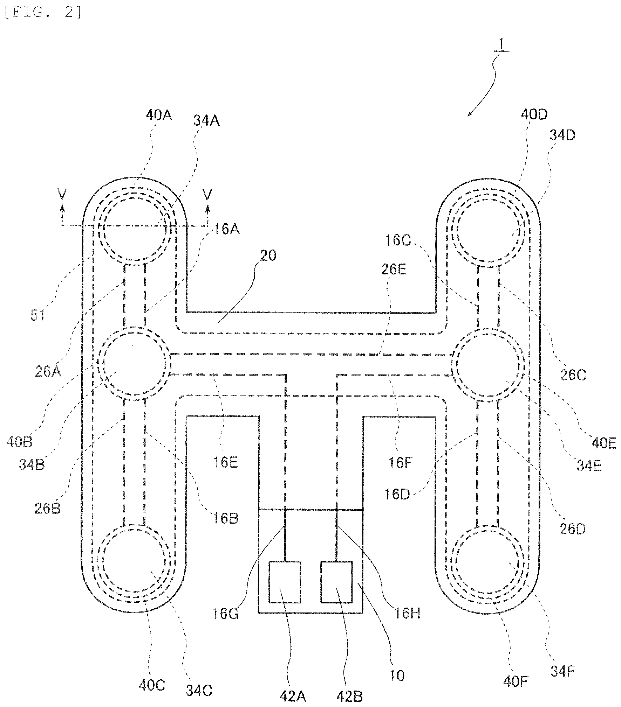

FIG. 2 is a plan view illustrating a seat occupancy sensor according to a first embodiment of the invention. As illustrated in FIG. 2, a seat occupancy sensor 1 mainly includes a first electrode sheet 10, a second electrode sheet 20 which overlaps the first electrode sheet 10, a spacer which is interposed between the first electrode sheet 10 and the second electrode sheet 20, and a cushion member 51 which is disposed at the opposite side to the spacer of the first electrode sheet 10.

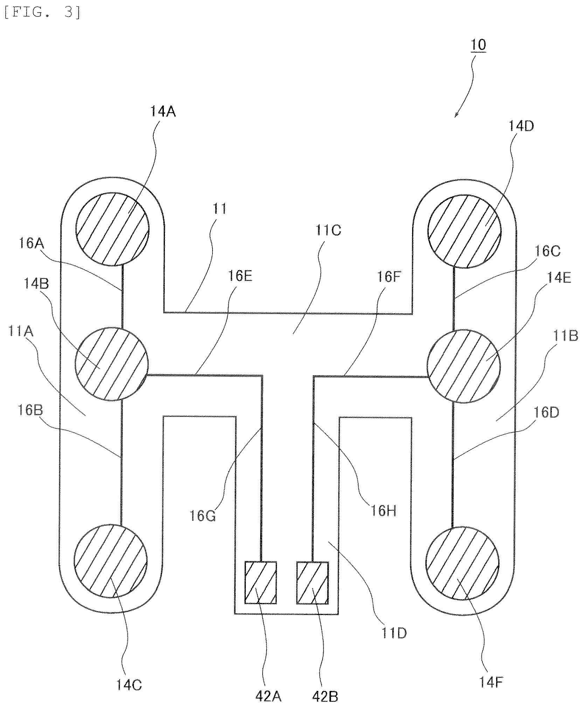

FIG. 3 is a plan view illustrating the first electrode sheet 10 illustrated in FIG. 2. As illustrated in FIG. 3, the first electrode sheet 10 mainly includes a first insulating sheet 11 which has flexibility and a film-like property, first electrodes 14A to 14F which are formed on the surface of the first insulating sheet 11, and terminals 42A and 42B which are formed on the surface of the first insulating sheet 11.

The first insulating sheet 11 includes a first portion 11A and a second portion 11B which have the same shape, are parallel to each other, make a pair, and are formed in a band shape, a third portion 11C which extends in a direction perpendicular to the first portion 11A and the second portion 11B between the first portion 11A and the second portion 11B, is connected to the respective middle portions of the first portion 11A and the second portion 11B, and is formed in a band shape, and a fourth portion 11D which extends in a direction perpendicular to the third portion 11C (extends in a direction parallel to the first portion 11A and the second portion 11B) so that one end thereof is connected to the middle portion of the third portion 11C and the other end thereof is formed as a free end and is formed a band shape. In this way, in the first insulating sheet 11, a substantially H-shape is formed by the pair of first and second portions 11A and 11B and the third portion 11C, and a substantially T-shape is formed by the third portion 11C and the fourth portion 11D.

Further, the first electrodes 14A to 14F are substantially formed in a circular shape. Then, the first electrodes 14A to 14F are provided on the pair of first and second portions 11A and 11B. Specifically, the first electrodes 14A to 14C are provided on the surface of the first portion 11A. Then, the first electrodes 14A and 14C are provided at the edges of both ends of the first portion 11A with a predetermined gap therebetween, and the first electrode 14B is provided in a portion connected with the third portion 11C. In this way, the first electrodes 14A to 14C are arranged in series on the surface of the first portion 11A with a gap therebetween.

Moreover, the first electrode 14A and the first electrode 14B are connected to a first wire 16A which is formed in a linear shape between the first electrode 14A and the first electrode 14B on the surface of the first portion 11A, and the first electrode 14B and the first electrode 14C are connected to a first wire 16B which is formed in a linear shape between the first electrode 14B and the first electrode 14C on the surface of the first portion 11A.

Moreover, the first electrode 14B is connected to a first wire 16E which is provided along the length direction of the third portion 11C on the surface of the third portion 11C. Then, the first wire 16E is connected to a first wire 16G which extends in the length direction of the fourth portion 11D in a portion connected with the fourth portion 11D.

Meanwhile, the first electrodes 14D to 14F are provided on the surface of the second portion 11B. Then, the first electrodes 14D and 14F are provided with a predetermined gap from the edges of both ends of the second portion 11B, and the first electrode 14E is provided in a portion connected with the third portion 11C. In this way, the first electrodes 14D to 14F are arranged in series with a predetermined gap therebetween on the surface of the second portion 11B.

Moreover, the first electrode 14D and the first electrode 14E are connected to a first wire 16C which is formed in a linear shape between the first electrode 14D and the first electrode 14E on the surface of the second portion 11B, and the first electrode 14E and the first electrode 14F are connected to a first wire 16D which is formed in a linear shape between the first electrode 14E and the first electrode 14F on the surface of the second portion 11B.

Moreover, the first electrode 14E is connected to a first wire 16F which is provided along the length direction of the third portion 11C on the surface of the third portion 11C. Then, the first wire 16F is connected to a first wire 16H which extends along the length direction of the fourth portion 11D at a portion connected with the fourth portion 11D.

Further, the terminals 42A and 42B substantially form a square shape, and the terminals 42A and 42B are arranged in parallel in a direction perpendicular to the length direction of the fourth portion 11D with a predetermined gap from the free end side edge of the surface of the fourth portion 11D. Then, one end of the terminal 42A is connected to the other end of the first wire 16G connected to the first wire 16E as described above, and one end of the terminal 42B is connected to the other end of the first wire 16H connected to the first wire 16F as described above.

In this way, the first electrodes 14A to 14C are electrically connected to the terminal 42A by the first wires 16A, 16B, 16E, and 16G. Similarly, the first electrodes 14D to 14F are electrically connected to the terminal 42B by the first wires 16C, 16D, 16F, and 16H.

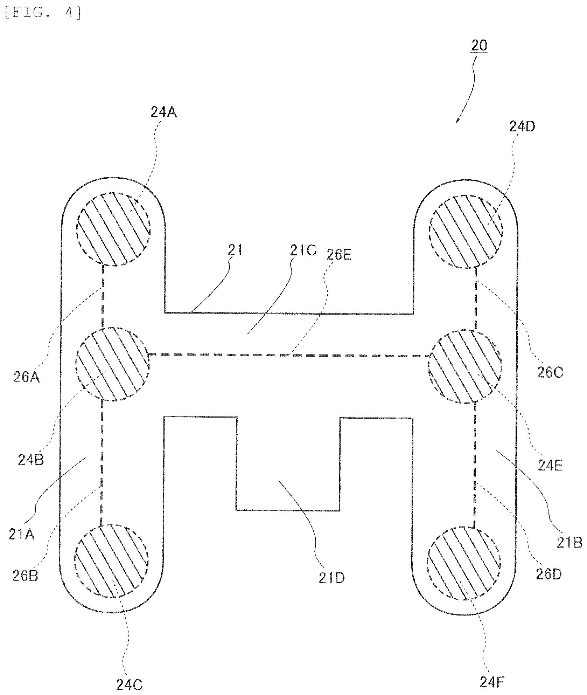

FIG. 4 is a plan view illustrating the second electrode sheet illustrated in FIG. 2. As illustrated in FIG. 4, the second electrode sheet 20 mainly includes a second insulating sheet 21 which has flexibility and a film-like property and second electrodes 24A to 24F which are formed on the surface of the second insulating sheet 21.

The second insulating sheet 21 includes a pair of first and second portions 21A and 21B which have the same shape and size as those of the first portion 11A and the second portion 11B of the first insulating sheet 11 and are formed in a band shape, a first portion 21C which has the same shape and size as those of the third portion 11C of the first insulating sheet 11, and a fourth portion 21D which is formed in a shape of which the width is equal to that of the fourth portion 11D of the first insulating sheet 11 and the length is shorter than that of the fourth portion. Then, the first portion 21A, the second portion 21B, and the third portion 21C are respectively connected to one another so as to completely overlap the first portion 11A, the second portion 11B, and the third portion 11C of the first insulating sheet 11 when the first electrode sheet 10 overlaps the second electrode sheet 20. Further, the fourth portion 21D of the second insulating sheet 21 overlaps the fourth portion 11D of the first electrode sheet when the first electrode sheet 10 overlaps the second electrode sheet 20, and is connected to the third portion 21C so as to expose the terminals 42A and 42B of the first electrode sheet 10. Furthermore, in the embodiment, the second insulating sheet 21 and the first insulating sheet 11 have the same flexibility, and are adapted to be warped by the same amount when the same force is applied thereto.

Further, the second electrodes 24A to 24F have the same shape and size as those of the first electrodes 14A to 14F. Furthermore, the second electrodes 24A to 24F are respectively provided at positions where the second electrodes completely overlap the first electrodes 14A to 14F at the surface of the first electrode sheet 10 of the second insulating sheet 21 when the second electrode sheet 20 overlaps the first electrode sheet 10.

Moreover, the second electrode 24A and the second electrode 24B are connected to a second wire 26A which is formed in a linear shape between the second electrode 24A and the second electrode 24B on the surface of the first portion 21A, and the second electrode 24B and the second electrode 24C are connected to a second wire 26B which is formed in a linear shape between the second electrode 24B and the second electrode 24C on the surface of the first portion 21A. Similarly, the second electrode 24D and the second electrode 24E are connected to a second wire 26C which is formed in a linear shape between the second electrode 24D and the second electrode 24E on the surface of the second portion 21B, and the second electrode 24E and the second electrode 24F are connected to a second wire 26D which is formed in a linear shape between the second electrode 24E and the second electrode 24F on the surface of the second portion 21B.

Furthermore, the second electrode 24B and the second electrode 24E are respectively connected to a second wire 26E which is provided on the surface of the third portion 21C along the length direction of the third portion 21C of the second insulating sheet 21.

In this way, the second electrodes 24A to 24F are electrically connected by the second wires 26A to 26E.

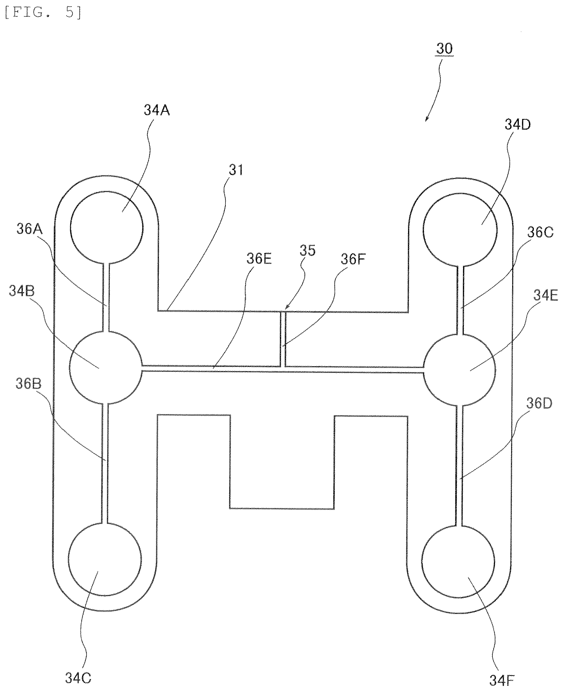

FIG. 5 is a plan view illustrating a spacer which is interposed between the first electrode sheet 10 and the second electrode sheet 20. The spacer 30 is formed as a flexible insulating sheet 31. Then, as illustrated in FIG. 5, the outer shape of the spacer 30 matches the outer shape of the second electrode sheet 20.

Further, the spacer 30 is provided with openings 34A to 34F which respectively have the same size. The peripheral edges of the openings 34A to 34F are substantially formed in a circular shape, and the diameters thereof are slightly smaller than those of the first electrodes 14A to 14F. Then, the openings 34A to 34F are provided at positions where the respective openings 34A to 34F fall within the outer peripheries of the respective first electrodes 14A to 14F when the spacer 30 overlaps the first electrode sheet 10 and the spacer 30 is viewed in a direction perpendicular to the spacer 30.

Moreover, the spacer 30 is provided with slits 36A to 36E which are air releasing slits and spatially connect the openings 34A to 34F to one another. Specifically, the opening 34A and the opening 34B are connected to the slit 36A, the opening 34B and the opening 34C are connected to the slit 36B, the opening 34D and the opening 34E are connected to the slit 36C, the opening 34E and the opening 34F are connected to the slit 36D, and the opening 34B and the opening 34E are connected to the slit 36E. Further, the spacer 30 is provided with a gas flow outlet 35 and a slit 36F which connects the gas flow outlet 35 to the slit 36E. Accordingly, the respective openings 34A to 34F are spatially connected to the outside of the spacer 30 through the gas flow outlet 35 and the slit 36A to 36F.

Furthermore, an adhesive (not illustrated) is coated on both surfaces of the spacer 30 so that both surfaces are bonded to the first electrode sheet 10 and the second electrode sheet 20.

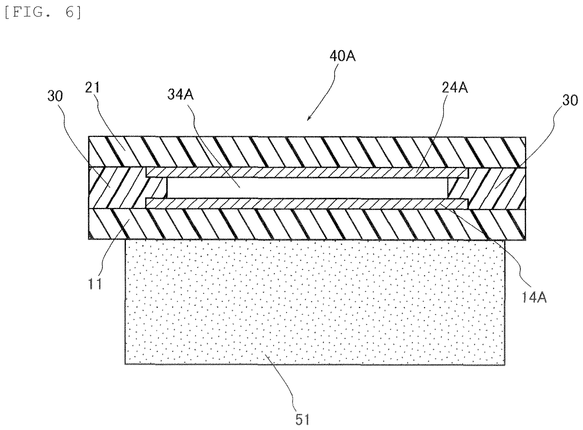

FIG. 6 is a diagram illustrating a state of a cross-section taken along the line V-V illustrated in FIG. 2. As illustrated in FIGS. 2 and 6, as described above, in the seat occupancy sensor 1, the first electrode sheet 10 and the second electrode sheet 20 overlap each other with the spacer 30 interposed therebetween, and are integrated by being fixed through the adhesive coated on both surfaces of the spacer 30.

In this way, in a case where the integrated structure of the first electrode sheet 10, the spacer 30, and the second electrode sheet 20 is viewed in a direction perpendicular to the seat occupancy sensor 1, the first electrode 14A of the first electrode sheet 10 and the second electrode 24A of the second electrode sheet 20 completely overlap each other, and the opening 34A formed in the spacer 30 falls within the outer peripheries of the first electrode 14A and the second electrode 24A. Then, the first electrode 14A and the second electrode 24A face each other with a predetermined gap therebetween by the spacer 30 as illustrated in FIG. 6. In this way, a pressure sensitive switch 40A is configured which includes the first and second insulating sheets 11 and 21, the spacer 30 provided with the opening 34A, and the pair of electrodes 14A and 24A facing each other through the opening 34A. Similarly, the other first electrodes 14B to 14F and the other second electrodes 24B to 24F respectively face each other with a predetermined gap therebetween in the openings 34B to 34F of the spacer 30, and the pressure sensitive switches 40B to 40F are configured as illustrated in FIG. 2.

Further, as illustrated in FIG. 6, a cushion member 51 which has an elastic force and is deformed to be crushed when a pressure is applied thereto is provided at the opposite side to the spacer 30 of the first insulating sheet 11. The cushion member 51 is formed of a sponge-like resin with a plurality of void holes, a non-woven cloth formed by entangling resinous fibers with an elastic force, rubber, or the like. Then, the cushion member 51 is formed in a shape which falls within the outer periphery of the second insulating sheet 21 as illustrated in FIG. 2. Then, the cushion member 51 is disposed so as to cover at least the openings 34A to 34F of the spacer 30 through the first insulating sheet 11 when viewed in a direction perpendicular to the spacer 30.

Furthermore, in the embodiment, the crushing thickness of the cushion member 51 is set to be a half or more of a distance between the facing electrodes in each of the pressure sensitive switches 40A to 40F.

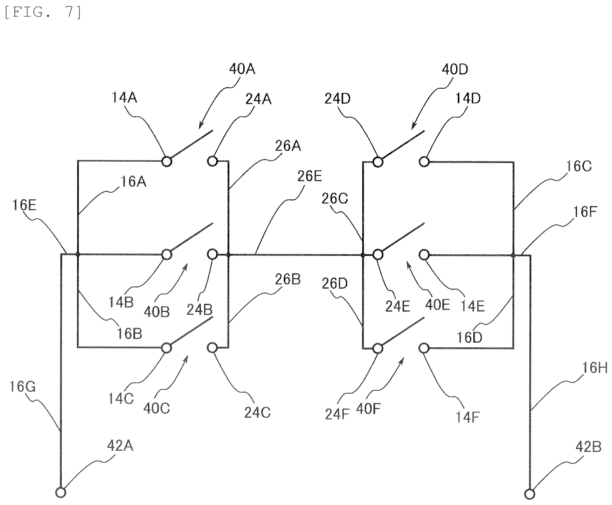

FIG. 7 is a circuit diagram illustrating a circuit configuration of the seat occupancy sensor illustrated in FIG. 2 by an equivalent circuit. As illustrated in FIG. 7, the pressure sensitive switches 40A to 40F with the above-described configuration are connected to one another by the second wires 26A to 26E formed on the surface of the second insulating sheet 21 and the first wires 16A to 16D formed on the surface of the first insulating sheet 11. In this way, the circuit of the seat occupancy sensor 1 is configured by connecting the respective pressure sensitive switches 40A to 40F.

Then, an OR circuit is configured in the pressure sensitive switch group including the pressure sensitive switch 40A, the pressure sensitive switch 40B, and the pressure sensitive switch 40C, and an OR circuit is configured in the pressure sensitive switch group including the pressure sensitive switch 40D, the pressure sensitive switch 40E, and the pressure sensitive switch 40F. Further, an AND circuit is configured by the pressure sensitive switch group including the pressure sensitive switch 40A, the pressure sensitive switch 40B, and the pressure sensitive switch 40C and the pressure sensitive switch group including the pressure sensitive switch 40D, the pressure sensitive switch 40E, and the pressure sensitive switch 40F. In this way, in the seat occupancy sensor 1, an AND-OR circuit is configured by the pressure sensitive switches 40A to 40F.

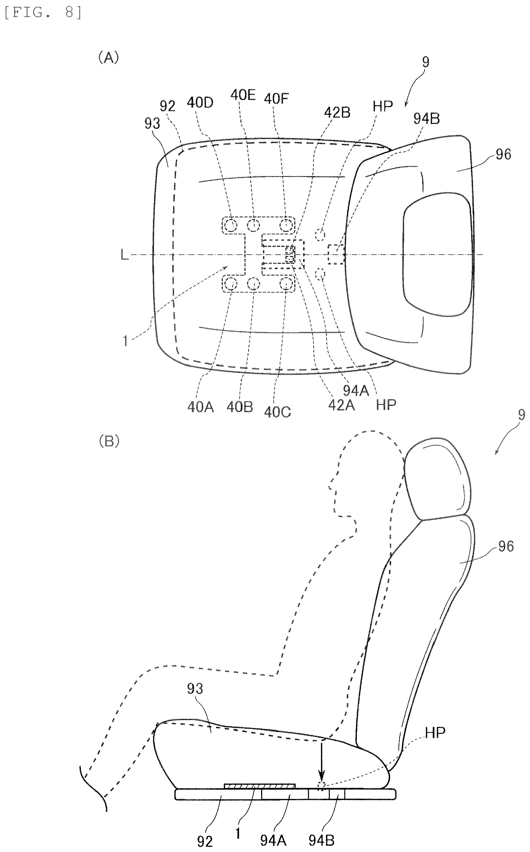

FIG. 8 is a diagram illustrating a state of the seat device according to the embodiment. Specifically, FIG. 8A is a diagram illustrating a state where the seat device 9 provided with the seat occupancy sensor 1 is viewed from the upside, and FIG. 8B is a diagram illustrating a state where the seat device 9 provided with the seat occupancy sensor 1 is viewed from the lateral side. As illustrated in FIGS. 8A and 8B, the seat device 9 includes a seat pan 92, a cushion pad 93 which is disposed on the seat pan 92, a backrest 96, and the seat occupancy sensor 1 which is disposed on the seat pan 92 and is interposed between the seat pan 92 and the cushion pad 93.

The seat pan 92 is a support member that is disposed below the cushion pad 93 and supports the cushion pad 93, and is formed as a placement member that places the seat occupancy sensor thereon in the embodiment. The seat pan 92 of the embodiment is formed by bending a metal plate with high rigidity, and is axisymmetrical about the center line (the line of the vertical plane passing through the center in the width direction of the cushion pad 93) L which is parallel to the front to rear direction of the cushion pad 93 and passes through the center in the width direction as illustrated in FIG. 8A. Further, a substantially square hole 94A is substantially formed at the center of the seat pan 92, the hole 94A is formed at the front side of the hip point HP when the person formally sits on the seat device 9, and a hole 94B is formed at the rear side of the hip point HP.

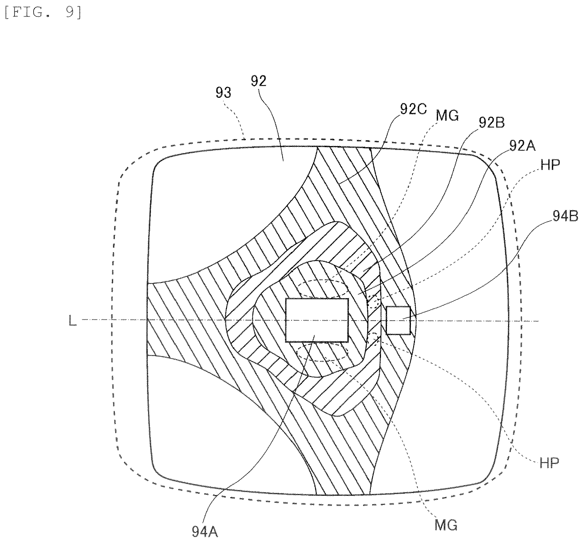

Furthermore, as described above, the "formal sitting" means that the person sits on the seat device while the hip is present at the deep position of the seat surface and the back comes into contact with the backrest 96, and the "hip point" indicates that the hip is present at the lowest side while the person sits on the seat device as illustrated in FIG. 9B.

The cushion pad 93 is formed of foamed urethane with a cushion property. That is, the cushion pad 93 has an elastic force and is deformed so as to be crushed when a pressure is applied thereto. Further, the cushion pad 93 is coated with a surface skin of a cloth (not illustrated). Further, the backrest 96 is connected to the seat pan 92 by a member (not illustrated) so as to contact the cushion pad 93 at the rear side of the cushion pad 93.

As illustrated in FIG. 8B, the seat occupancy sensor 1 is disposed below the cushion pad 93 so as to receive the pressure from the cushion pad 93. Specifically, the seat occupancy sensor 1 is disposed on the seat pan 92 of the seat device 9 of the vehicle or the like and is interposed between the seat pan 92 and the cushion pad 93. Further, in a state where the seat occupancy sensor 1 is disposed in this way, the second insulating sheet 21 is disposed near the cushion pad 93 so as to contact the cushion pad 93, the first insulating sheet 11 is disposed near the seat pan, and the cushion member 51 is interposed between the seat pan 92 and the first insulating sheet 11.

Then, as illustrated in FIG. 8A, the pressure sensitive switch 40C is disposed in a region adjacent to the left side of the hole 94A of the seat pan 92, the pressure sensitive switch 40B and the pressure sensitive switch 40A are disposed at the front side of the pressure sensitive switch 40C, the pressure sensitive switch 40F is disposed in a region adjacent to the right side of the hole 94A of the seat pan 92, and the pressure sensitive switch 40E and the pressure sensitive switch 40D are disposed at the front side of the pressure sensitive switch 40F. Accordingly, the seat occupancy sensor 1 is disposed so that the pressure sensitive switches 40A to 40C are positioned at the left side about the center line L passing through the center of the cushion pad 93 and the pressure sensitive switches 40D to 40F are positioned at the right side. Furthermore, the line connecting the pressure sensitive switch 40A to the pressure sensitive switch 40D is perpendicular to the center line L, and the pressure sensitive switch 40A and the pressure sensitive switch 40D are disposed at positions which are axisymmetrical to each other about the center line L. Similarly, the line connecting the pressure sensitive switch 40B to the pressure sensitive switch 40E is perpendicular to the center line L, and the pressure sensitive switch 40B and the pressure sensitive switch 40E are disposed at positions which are axisymmetrical to each other about the center line L. Further, the line connecting the pressure sensitive switch 40C to the pressure sensitive switch 40F is perpendicular to the center line L, and the pressure sensitive switch 40C and the pressure sensitive switch 40F are disposed at position, which are axisymmetrical to each other about the center line L. Then, as described above, since the pressure sensitive switches 40A to 40C and the pressure sensitive switches 40D to 40F configure an AND circuit, an AND circuit is configured by the pressure sensitive switch group disposed at the left side of the center line L and the pressure sensitive switch group disposed at the right side of the center line L. Further, as described above, an OR circuit is configured in the pressure sensitive switch group including the pressure sensitive switches 40A to 40C, and an OR circuit is configured in the pressure sensitive switch group including the pressure sensitive switches 40D to 40F. For this reason, an OR circuit is configured by the plurality of pressure sensitive switches disposed at the left side of the center line L and the plurality of pressure sensitive switches disposed at the right side of the center line L.

Then, the terminals 42A and 42B are derived from the hole 94A, and are electrically connected to a measurement unit and a power supply (not illustrated) at the outside, so that a voltage is applied to the terminals 42A and 42B.

Furthermore, in this embodiment, the cushion pad 93 has the same elastic force as that of the cushion member 51. Accordingly, when the same pressure is applied to the cushion pad 93 and the cushion member 51, the cushion pad 93 and the cushion member 51 respectively press the first insulating sheet 11 and the second insulating sheet 21 by the same amount.

Next, an operation of the seat occupancy sensor will be described.

FIG. 9 is a conceptual diagram illustrating a distribution of a load which is applied from the person to the seat pan 92 of the seat device 9 through the surface skin and the cushion pad 93 while the person formally sits on the seat device 9 as in FIG. 1. In FIG. 9, a region 92A which is adjacent to the hole 94A formed in the seat pan 92 receives the largest pressure from the cushion pad 93, a region 92B which is disposed at the outside of the region 92A receives the pressure which is large at the next place, and a region 92C which is disposed at the outside of the region 92B receives the pressure which is large at the next place.

As described above by referring to FIG. 1, when the person sits on the seat device, the pressure concentrates on a position where the hip of the person is positioned on the surface of the cushion pad. However, as illustrated in FIG. 9, the pressure which is applied from the cushion pad 93 to the seat pan 92 by the load of the person is widely distributed on the seat pan 92. Then, as illustrated in FIG. 9, when the person sits on the seat device, the seat pan 92 is pressed by a strong force in a region adjacent to the hole 94A formed on the center line L at the front side of the hip point HP compared to the other regions.

The reason is considered as below. That is, when the person formally sits on the seat device 9 provided with the backrest 96, the back of the person comes into contact with the backrest 96, the back is pressed by the backrest 96, and the force applied to the back presses the hip of the person forward. Accordingly, the hip of the sitting person presses the cushion pad 93 in the vertical direction by the gravity, and presses the cushion pad 93 forward by the force from the back. In this way, the pressure which is applied from the cushion pad 93 to the seat pan 92 increases at the front side of the hip point HP of the person who formally sits on the cushion pad compared to the other portions. Then, when the person sits on the seat device, the person generally sits on the substantial center of the cushion pad in the width direction. Accordingly, there is a tendency that a large pressure is applied to the vicinity of the center of the cushion pad 93 in the width direction, that is, the vicinity of the center line L. In this way, the region adjacent to the hole 94A formed at the center of the cushion pad 93 in the width direction at the front side of the hip point HP is pressed by a large pressure compared to the region adjacent the other hole. Furthermore, in this embodiment, a place (maximum load region) MG in which the seat pan 92 particularly receives the large pressure from the cushion pad 93 becomes the region adjacent to the hole 94A in the lateral direction even in the region 92A. Further, as described above, since the person sits on the seat device so as to be bilaterally symmetrical at the substantial center of the cushion pad in the width direction when the person sits on the seat device, the pressure which is applied from the cushion pad 93 to the seat pan 92 is substantially symmetrical about the center line L. Further, when the person formally sits on the seat device 9, the pelvis of the person is disposed so as to be bilaterally symmetrical about the center line L in the left to right direction. For this reason, the distribution of the pressure which is applied from the cushion pad to the seat pan 92 is also widened in the lateral direction. In this way, the distribution of the pressure is widened in the front direction and the width direction of the seat pan 92.

In this embodiment, the place (maximum load region) MG in which the seat pan 92 particularly receives the large pressure from the cushion pad 93 becomes the region adjacent to the hole 94A in the lateral direction even in the region 92A. Further, since the person sits on the seat device so as to be bilaterally symmetrical at the substantial center of the cushion pad in the width direction, the pressure which is applied from the cushion pad 93 to the seat pan 92 is substantially symmetrical about the center line L. Furthermore, when the person formally sits on the seat device 9, the pelvis of the person is disposed so as to be bilaterally symmetrical about the center line L in the left to right direction. For this reason, the distribution of the pressure which is applied from the cushion pad to the seat pan 92 is also widened in the lateral direction.

Furthermore, in the specification, the maximum load region indicates a region that receives a pressure of 90 or more in a case where the pressure in a place in which the seat pan receives the smallest pressure from the cushion pad is set to 0 and the pressure in a place in which the seat pan receives the largest pressure from the cushion pad is set to 100.

As described above, the pressure sensitive switches 40C and 40F are respectively disposed at the lateral side of the hole 94A of the seat pan 92, the pressure sensitive switches 40B and 40E are disposed at the front side of the pressure sensitive switches 40C and 40F, and the pressure sensitive switches 40A and 40D are further disposed at the front side thereof. Then, in this embodiment, the maximum load region MG overlaps the place where at least the pressure sensitive switches 40C and 40F and the pressure sensitive switches 40B and 40E are disposed. Accordingly, the respective pressure sensitive switches 40C, 40F, 40B, and 40E may appropriately detect the pressure generated by the sitting of the person when the person formally sits on the seat device. Then, the pressure sensitive switches 40A and 40D are disposed at a place where the pressure sensitive switches receive a comparatively large pressure when the person formally sits on the seat device and hence may also appropriately detect the pressure generated by the sitting of the person when the person sits on the seat device. In particular, the pressure sensitive switches 40A and 40D may appropriately detect the pressure generated by the sitting of the person when the person sits at the front side of the seat device 9.

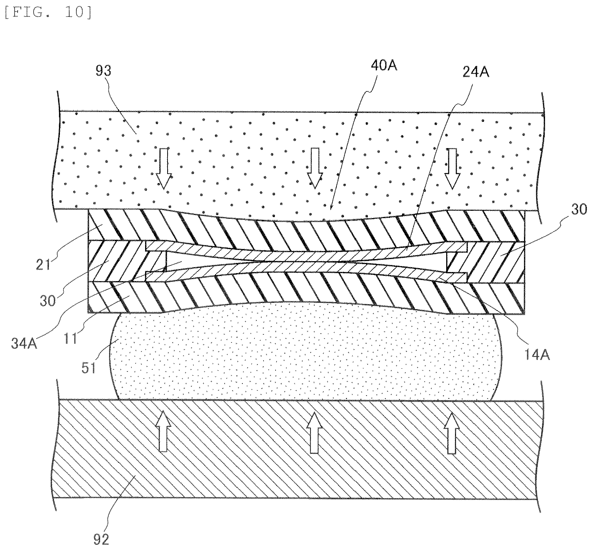

FIG. 10 is a diagram illustrating a state where the pressure sensitive switch is turned on while the seat occupancy sensor is disposed inside the seat as in FIG. 8 from the same viewpoint as that of FIG. 6. Furthermore, in FIG. 10, only a part of the seat pan 92 and the cushion pad 93 are illustrated for the easy understanding. When the person sits on the seat device while the seat occupancy sensor 1 is disposed inside the seat device 9, as illustrated in FIG. 10, the pressure generated by the load of the person is applied in a direction perpendicular to both surfaces of the seat occupancy sensor 1 as indicated by the arrow. Specifically, the second insulating sheet 21 receives the pressure from the cushion pad 93, and the cushion member 51 receives the pressure from the seat pan 92. At this time, the cushion member 51 is deformed so as to be crushed by the pressure. Then, the first insulating sheet 11 receives the pressure from the cushion member 51 by the elastic force of the cushion member 51 and is warped so as to enter the opening 34A of the spacer 30. Similarly, as described above, the second insulating sheet 21 receives the pressure from the cushion pad 93 and is warped so as to enter the opening 34A of the spacer 30. For this reason, the first electrode 14A provided in the first insulating sheet 11 and the second electrode 24A provided in the second insulating sheet 21 face each other through the opening 34A of the spacer 30 and contact each other. In this way, the pressure sensitive switch 40A is turned on.

Furthermore, in the seat occupancy sensor 1 of the embodiment, as described above, the crushing thickness of the cushion member 51 is set to be a half or more of a distance between the first electrode 14A and the second electrode 24A. For this reason, the first electrode 14A which is provided on the insulating sheet 11 may approach the second electrode 24A by a half or more of the distance between the electrodes only by the crushing deformation instead of the warpage of the cushion member 51, and hence the pressure sensitive switch 40A may be easily turned on.

Further, when the person sits on the seat device, substantially the same pressure is applied from the seat pan 92 and the cushion pad 93 to the seat occupancy sensor 1. Then, as described above, in this embodiment, since the cushion pad 93 has the same elastic force as that of the cushion member 51, the cushion member 51 and the cushion pad 93 respectively press the first insulating sheet 11 and the second insulating sheet 21 by the same elastic force. Accordingly, the insulating sheets 11 and 21 are warped by the same amount, and the pairs of electrodes 14A and 24A contact each other in the vicinity of the substantial center in the thickness direction of the spacer 30 inside the opening 34A. For this reason, in the seat device of the embodiment, it is possible to suppress an increase in the warpage amount of one insulating sheet of the seat occupancy sensor 1, and hence to improve the sitting detection sensitivity.

Further, when the first insulating sheet 11 and the second insulating sheet 21 are warped, the air inside the opening 34A is discharged from the gas flow outlet 35 through the slits 36A, 36E, and 36F illustrated in FIG. 5. Accordingly, when the pressure is applied to the seat occupancy sensor 1, the first insulating sheet 11 and the second insulating sheet 21 may be appropriately warped.

Similarly, as in the pressure sensitive switch 40A, even the pressure sensitive switches 40B to 40F are turned on in a manner such that the first insulating sheet 11 and the second insulating sheet 21 are pressed and warped by the elastic forces of the cushion member 51 and the cushion pad 93. At this time, the air inside each of the openings 34B to 34F is discharged from the gas flow outlet 35 through the slits 36B to 36E. Accordingly, as in the case where the pressure sensitive switch 40A is turned on, the first insulating sheet 11 and the second insulating sheet may be appropriately warped, so that the pair of electrodes of each of the pressure sensitive switches 40B to 40F may easily contact each other.

Then, as described above, since the AND-OR circuit is configured by the pressure sensitive switches 40A to 40F, the terminal 42A and the terminal 42B are electrically connected to each other when at least one of the pressure sensitive switch 40A, the pressure sensitive switch 40B, and the pressure sensitive switch 40C and at least one of the pressure sensitive switch 40D, the pressure sensitive switch 40E, and the pressure sensitive switch 40F are turned on. In this way, when a measurement unit (not illustrated) detects a detection signal generated by the seat occupancy sensor 1, the sitting of the person is detected.

As described above, according to the seat occupancy sensor 1 of the embodiment, when a pressure is applied to the seat occupancy sensor 1 by the sitting of the person, the cushion member 51 is deformed so as to be crushed, and the insulating sheet 11 is pressed by the elastic force. At this time, the cushion member 51 presses the insulating sheet 11 so that the insulating sheet 11 enters the openings 34A to 34F of the spacer 30. Accordingly, since the seat occupancy sensor 1 is disposed so that the cushion member 51 is interposed between the seat pan 92 and the insulating sheet 11 as in the seat device 9, the insulating sheet 11 near the seat pan 92 may be appropriately warped when the person sits on the seat device. Meanwhile, since the seat pan 92 supports the cushion pad 93, the insulating sheet 21 which faces the insulating sheet 11 near the seat pan 92 may be appropriately warped by being pressed by the cushion pad 93. For this reason, according to the seat occupancy sensor 1 of the invention, the sitting of the person may be appropriately detected while the seat occupancy sensor is disposed on the seat pan 92.

Moreover, according to the seat device 9 of the embodiment, since the seat occupancy sensor 1 is disposed between the seat pan 92 and the cushion pad 93, it is possible to prevent a problem in which the sitting person feels a sensation of touch different from that of the cushion pad 93 due to the seat occupancy sensor 1, and hence the seat device 9 using the seat occupancy sensor 1 may appropriately detect the sitting of the person.

Further, since the cushion member 51 disposed between the seat pan 92 and the first insulating sheet 11 adjusts the height of the pressure sensitive switches 40A to 40F from the seat pan 92, it is possible to suppress a noticeable increase in the load for turning on the pressure sensitive switches 40A to 40F even when a gap is formed between the seat pan 92 and the cushion pad 93.

Further, the person sitting on the seat generally sits on the center of the cushion pad 93 in the width direction. Meanwhile, it is difficult to mention that the baggage is always placed on the center of the cushion pad 93 in the width direction. Accordingly, according to the seat device 9, the pressure sensitive switches 40A to 40C and the pressure sensitive switches 40D to 40F are disposed at the left and right sides of the center line L passing through the center of the cushion pad 93 in the width direction, the sitting of the person is appropriately detected, and hence it is possible to prevent a problem in which the baggage is erroneously detected.

Moreover, the person sitting on the seat generally sits on the seat in the front direction. At this time, the left and right pelvises of the hip of the person are arranged in a direction perpendicular to the front to rear direction of the cushion pad 93, and press the cushion pad 93. Accordingly, according to the seat device 9, since the pair of the pressure sensitive switches 40A and the pressure sensitive switch 40D, the pair of the pressure sensitive switch 40B and the pressure sensitive switch 40E, and the pair of the pressure sensitive switch 40C and the pressure sensitive switch 40F are respectively disposed at the left and right sides about the center line L and are arranged in a direction perpendicular to the front to rear direction of the cushion pad 93, the sitting of the person may be further appropriately detected.

Moreover, since the person sitting on the seat generally sits on the seat device 9 in the front direction about the center of the cushion pad 93 in the width direction, the left and right pelvises of the hip of the person are arranged at the bilaterally symmetrical positions about the center line L that is parallel to the front to rear direction of the cushion pad 93 and passes through the center in the width direction, and presses the cushion pad. Accordingly, according to the seat device 9, since the pair of the pressure sensitive switch 40A and the pressure sensitive switch 40D, the pair of the pressure sensitive switch 40B and the pressure sensitive switch 40E, and the pair of the pressure sensitive switch 40C and the pressure sensitive switch 40F are disposed at the symmetrical positions about the center line L, the sitting of the person may be further appropriately detected.

Next, a material forming the seat occupancy sensor 1 will be described.

The insulating sheet 11 of the first electrode sheet 10, the insulating sheet 21 of the second electrode sheet 20, and the spacer 30 are formed of a flexible insulating resin. As such a resin, polyethylene terephthalate (PET), polyethylene naphthalate (PEN), polyimide (PI), and the like may be exemplified. Among these, PEN is preferred from the viewpoint of excellent heat resistance.

Further, as the adhesive applied on both surfaces of the spacer 30, an acrylic adhesive is preferred. For example, an adhesive may be exemplified that uses a base in which an acrylic polymer uses one or two or more of (meth)acrylic alkyl ester as a monomeric component.

Further, the first electrodes 14A to 14F, the second electrodes 24A to 24F, the first wires 16A to 16H, the second wires 26A to 26E, and the terminals 42A and 42B are formed of a conductive paste or a metal foil formed by plating. A part of these components may be formed of the conductive paste, and the other portions may be formed of the metal foil formed by plating. As the conductive paste, various metal pastes such as a silver paste or a carbon paste may be exemplified. Further, as the metal foil formed by plating, copper, nickel, or a laminated structure thereof may be exemplified.

Further, the cushion member 51 is a member that has an elastic force and is deformed so as to be crushed as described above. The material forming such a member is not particularly limited. As the material of the cushion member 51, rubber or a resin including at least one of silicon and polyester may be exemplified. Among these, in the resin which includes at least one of silicon and polyester, the elastic force changes by a small amount with a change in temperature. For this reason, even when the seat occupancy sensor 1 is disposed inside an automobile of which the environment temperature changes largely, a change in the sitting detection load may be desirably suppressed.

### (Second embodiment)

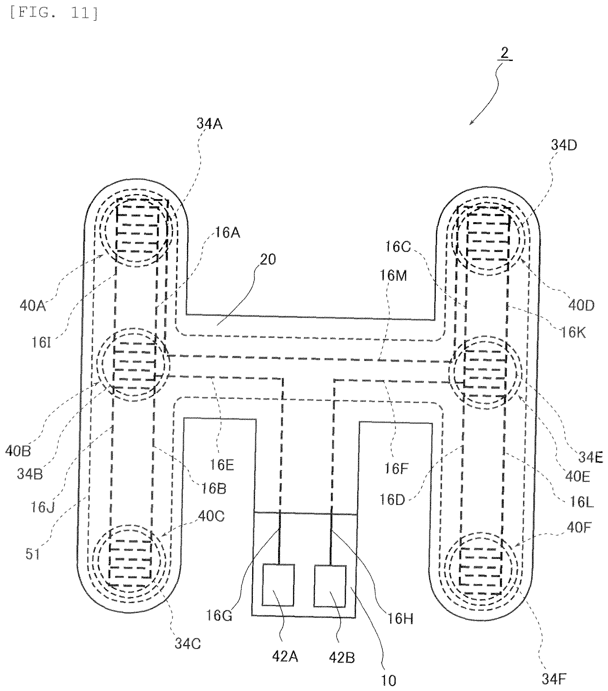

Next, a second embodiment of the invention will be described in detail by referring to FIGS. 11 to 13. Furthermore, the same reference numerals will be given to the same or equivalent components to those of the first embodiment except for the particular description, and the description thereof will not be repeated. FIG. 11 is a plan view illustrating a seat occupancy sensor which is used in a seat device according to the second embodiment of the invention.

As illustrated in FIG. 11, a seat occupancy sensor 2 of the embodiment is different from the seat occupancy sensor 1 of the first embodiment in that the first electrodes 14A to 14F of the pressure sensitive switches 40A to 40F are formed as comb electrodes.

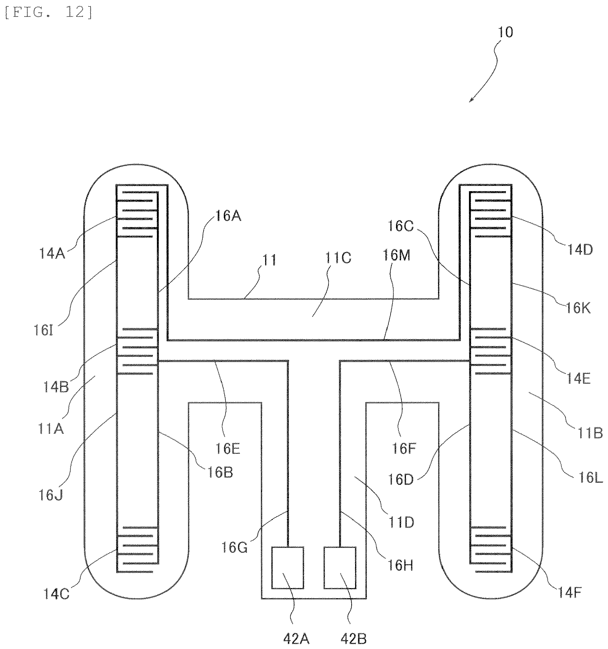

FIG. 12 is a plan view illustrating the first electrode sheet illustrated in FIG. 11. As illustrated in FIG. 12, in the comb electrode which constitutes the first electrodes 14A to 14F, a plurality of parallel conductors are connected to one another at one side and a plurality of other parallel conductors are connected to each other at the other side. Then, the plurality of other parallel conductors connected to one another at the other side are disposed so as to enter between the plurality of parallel conductors connected to one another at one side, and hence the respective conductors are alternately arranged. Then, the plurality of parallel conductors connected to one another at one side and the plurality of other parallel conductors connected to one another at the other side are insulated from one another with a predetermined gap therebetween. In this way, in the comb electrode, a pair of parallel conductors is provided inside one electrode so as to be insulated from each other.

Then, the plurality of parallel conductors which are connected to one another at one side of the first electrode 14A are connected to one end of the first wire 16A which extends from the first electrode 14A to the first electrode 14B along the length direction of the first portion 11A. Further, the plurality of other parallel conductors which are connected to one another at the other side of the first electrode 14A are connected to one end of the first wire 161 which extends from the first electrode 14A to the first electrode 14B along the length direction of the first portion 11A. Further, the plurality of parallel conductors which are connected to one another at one side of the first electrode 14B are connected to one end of the first wire 16B which extends from the first electrode 14B to the first electrode 14C along the length direction of the first portion 11A and the other end of the first wire 16A. Moreover, the plurality of other parallel conductors which are connected to one another at the other side of the first electrode 14B are connected to one end of the first wire 16J which extends from the first electrode 14B to the first electrode 14C along the length direction of the first portion 11A and the other end of the first wire 161. Further, the plurality of parallel conductors which are connected to one another at one side of the first electrode 14C are connected to the other end of the first wire 16B, and the plurality of other parallel conductors which are connected to one another at the other side of the first electrode 14C are connected to the other end of the first wire 16J.

Further, the plurality of parallel conductors which are connected to one another at one side of the first electrode 14D are connected to one end of the first wire 16C which extends from the first electrode 14D to the first electrode 14E along the length direction of the second portion 11B. Moreover, the plurality of other parallel conductors which are connected to one another at the other side of the first electrode 14D are connected to one end of the first wire 16K which extends from the first electrode 14D to the first electrode 14E along the length direction of the second portion 11B. Further, the plurality of parallel conductors which are connected to one another at one side of the first electrode 14E are connected to one end of the first wire 16D which extends from the first electrode 14E to the first electrode 14F along the length direction of the second portion 11B and the other end of the first wire 16C. Moreover, the plurality of other parallel conductors which are connected to one another at the other side of the first electrode 14B are connected to one end of the first wire 16L which extends from the first electrode 14E to the first electrode 14F along the length direction of the second portion 11B and the other end of the first wire 16K. Further, the plurality of parallel conductors which are connected to one another at one side of the first electrode 14F are connected to the other end of the first wire 16D, and the plurality of other parallel conductors which are connected to one another at the other side of the first electrode 14F are connected to the other end of the first wire 16L.

Further, the plurality of parallel conductors which are connected to one another at one side of the first electrode 14B are connected to the first wire 16E as in the first embodiment, and the plurality of parallel conductors which are connected to one another at one side of the first electrode 14E are connected to the first wire 16F as in the first embodiment. Moreover, the plurality of parallel conductors which are connected to one another at the other side of the first electrode 14A are connected to one end of the first wire 16M. As illustrated in FIG. 12, the first wire 16M bypasses the plurality of parallel conductors connected to one other at the other side of the first electrode 14A, extends in the length direction of the first portion 11A, is bent perpendicularly at the portion in which the first portion 11A is connected to the third portion 11C, and extends in the length direction of the third portion 11C. Then, the first wire 16M is bent perpendicularly again at the portion in which the third portion 11C is connected to the second portion 11B, and extends in the length direction of the second portion 11B toward the first electrode 14D. Then, the first wire 16K bypasses the plurality of parallel conductors which are connected to one another at one side of the first electrode 14D, so that the other end thereof is connected to the plurality of parallel conductors which are connected to one another at the other side of the first electrode 14D.

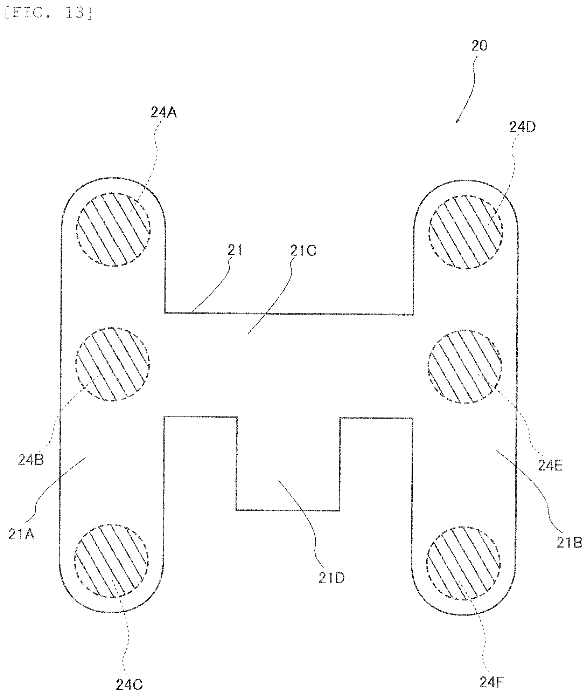

FIG. 13 is a plan view illustrating the second electrode sheet illustrated in FIG. 11. As illustrated in FIG. 13, the second electrode sheet 20 of the embodiment is different from the second electrode sheet 20 of the first embodiment in that the second wires 26A to 26E are not provided.

Then, as illustrated in FIG. 11, the first electrode sheet 10 and the second electrode sheet 20 illustrated in FIG. 12 overlap each other through the spacer 30 which has the same configuration as that of the first embodiment so as to be integrated with each other.

In this way, as in the first embodiment, an OR circuit is configured in the pressure sensitive switch group including the pressure sensitive switches 40A to 40C, and an OR circuit is configured in the pressure sensitive switch group including the pressure sensitive switches 40D to 40F. Further, an AND circuit is configured by the pressure sensitive switch group including the pressure sensitive switches 40A to 40C and the pressure sensitive switch group including the pressure sensitive switches 40D to 40F, and the pressure sensitive switches 40A to 40F configure an AND-OR circuit.

The seat occupancy sensor 2 of the embodiment is disposed in the seat device as in the seat occupancy sensor 1 of the first embodiment, and when the person sits on the seat device, the pressure sensitive switches 40A to 40F are pressed by the pressure applied from the cushion pad 93 and the seat pan 92. Then, at least one of the second electrodes 24A to 24C contact the parallel conductors of the first electrodes 14A to 14C. For this reason, in at least one of the first electrodes 14A to 14C, the pair of insulated parallel conductors is electrically connected to each other through the second electrodes 24A to 24C. Similarly, at least one of the second electrodes 24D to 24F contact the parallel conductors of the first electrodes 14D to 14F. For this reason, in at least one of the first electrodes 14D to 14F, the pair of insulated parallel conductors are electrically connected to each other through the second electrodes 24D to 24F. In this way, at least one of the pressure sensitive switches 40A to 40C and at least one of the pressure sensitive switches 40D to 40F are turned on. In this way, the sitting of the person is detected by the seat occupancy sensor 2.

### (Third embodiment)

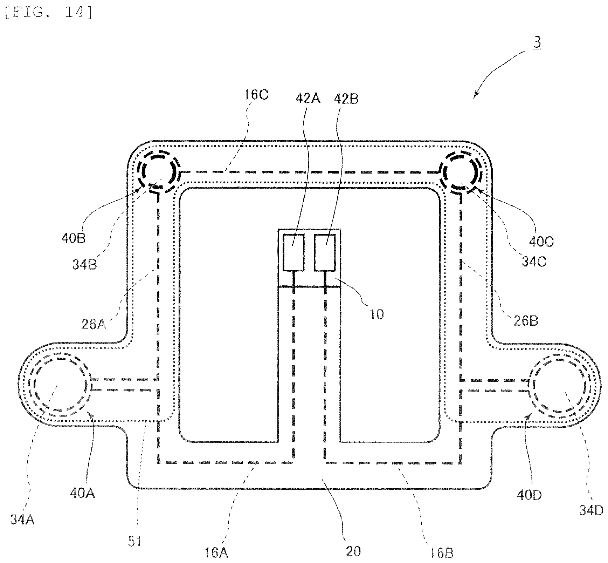

Next, a third embodiment of the invention will be described in detail by referring to FIGS. 14 to 16. Furthermore, the same reference numerals will be given to the same or equivalent components to those of the first embodiment except for the particular description, and the description thereof will not be repeated. FIG. 14 is a plan view illustrating a seat occupancy sensor according to the third embodiment of the invention.

As illustrated in FIG. 14, a seat occupancy sensor 3 of the embodiment is different from the seat occupancy sensor 1 of the first embodiment in the sensor shape, the number of the pressure sensitive switches, and the size of the pressure sensitive switch.

Specifically, the shape of the seat occupancy sensor 1 of the first embodiment is substantially formed in an H-shape, but the shape of the seat occupancy sensor 3 of the present embodiment is substantially formed in a square shape with an opening. Further, in the first embodiment, six pressure sensitive switches 40A to 40F are employed, but in the present embodiment, four pressure sensitive switches 40A to 40D are employed. Further, in the first embodiment, the respective pressure sensitive switches 40A to 40F are formed with the same size, but in the present embodiment, the pressure sensitive switches 40A and 40D and the pressure sensitive switches 40B and 40C have different size, so that two types of different size are employed in total.

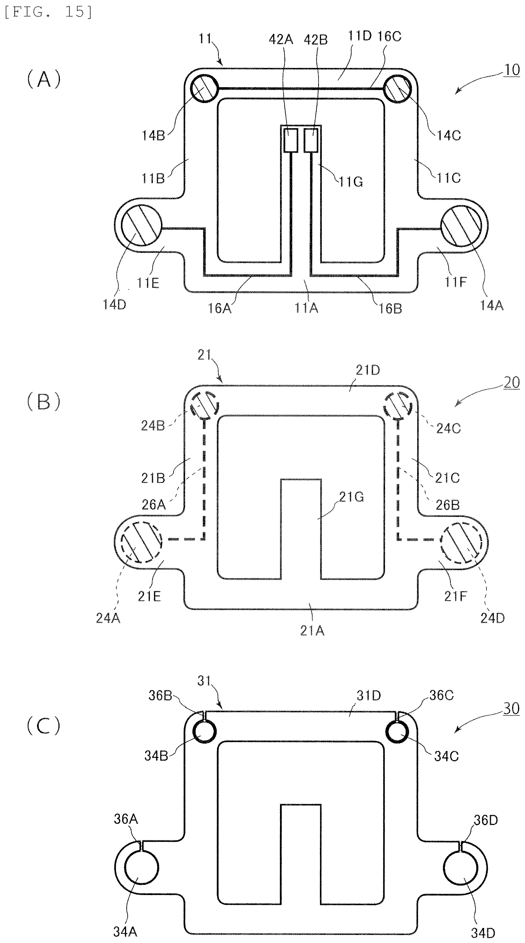

FIG. 15 is a plan view illustrating the first electrode sheet, the second electrode sheet, and the spacer of FIG. 14. Specifically, FIG. 15A illustrates the first electrode sheet of FIG. 14, FIG. 15B illustrates the second electrode sheet of FIG. 14, and FIG. 15C illustrates the spacer.

As illustrated in FIG. 15A, the first electrode sheet 10 mainly includes the first insulating sheet 11 and the first electrodes 14A to 14D provided on the surface of the first insulating sheet 11.

The first insulating sheet 11 includes the first portion 11A to the seventh portion 11G which are formed in a band shape. The first portion 11A to the fourth portion 11D are connected to one another, and are substantially formed in a square shape with a substantially square opening. The fifth portion 11E extends from the middle portion of the second portion 11B toward the outside of the opening, the sixth portion 11F extends from the middle portion of the third portion 11C toward the outside of the opening, and the ends of the fifth portions 11E and 11F are respectively formed as free ends. The seventh portion 11G extends from the middle portion of the first portion 11A in the length direction toward the inside of the opening, and the end thereof is formed as an opened end. Furthermore, the first insulating sheet 11 is formed so as to be bilaterally symmetrical about a line (hereinafter, referred to as a tail center line) that passes through the center of the seventh portion 11G and follows the length direction of the seventh portion 11G.

The first electrodes 14A to 14D are respectively formed in a substantially circular shape, but the diameters of the first electrodes 14A and 14D are different from the diameters of the first electrodes 14B and 14C. In the present embodiment, the diameters of the first electrodes 14A and 14D are set to be larger than the diameters of the first electrodes 14B and 14C.

The first electrode 14A is provided on the fifth portion 11E, and the first electrode 14D is provided on the sixth portion 11F, so that the first electrode 14A and the first electrode 14D are formed so as to be bilaterally symmetrical about the tail center line. Further, the first electrode 14B is provided on the connection portion between the second portion 11B and the fourth portion 11D, and the first electrode 14C is provided on the connection portion between the third portion 11C and the fourth portion 11D, so that the first electrode 14B and the first electrode 14C are formed so as to be bilaterally symmetrical about the tail center line.

The first electrode 14A is electrically connected with the terminal 42A provided on the seventh portion 11G by the first wire 16A, and the first electrode 14D is electrically connected with the terminal 42B provided on the seventh portion 11G by the first wire 16B. Further, the first electrodes 14B and 14C are electrically connected to each other by the first wire 16C.

As illustrated in FIG. 15B, the second electrode sheet 20 mainly includes the second insulating sheet 21 and the second electrodes 24A to 24D provided on the surface of the second insulating sheet 21.

The second insulating sheet 21 includes the first portion 21A to the seventh portion 21G which have the same shape and size as those of the first portion 11A to the seventh portion 11G of the first insulating sheet 11.

The second electrodes 24A to 24D have the same shape and size as those of the first electrodes 14A to 14D. Further, the second electrodes 24A to 24D are respectively provided at positions where the second electrodes completely overlap the first electrodes 14A to 14D on the surface near the first electrode sheet 10 of the second insulating sheet 21 when the second electrode sheet 20 overlaps the first electrode sheet 10.

The second electrode 24A is electrically connected to the second electrode 24B by the second wire 26A, and the second electrode 24D is electrically connected to the second electrode 24C by the second wire 26B.

As illustrated in FIG. 15C, the spacer 30 has the same shape and size as those of the first electrode sheet 10 and the second electrode sheet 20, and the spacer 30 is provided with the substantially circular openings 34A to 34D. The formation positions of the openings 34A to 34D are set as the positions in which the respective openings 34A to 34D fall within the respective outer shapes of the first electrodes 14A to 14D in a case where the spacer 30 overlaps the first electrode sheet 10 and is viewed in a direction perpendicular to the spacer 30.

The diameters of the openings 34A and 34D are slightly smaller than those of the first electrodes 14A and 14D, and the diameters of the openings 34B and 34C are slightly smaller than those of the first electrodes 14B and 14C. The diameters of the openings 34A and 34D and the diameters of the opening 34B and 34C are different from one another, and the diameters of the openings 34A and 34D are larger than those of the opening 34B and 34C.

Furthermore, as in the first embodiment, the spacer 30 is provided with slits 36A to 36D which are air releasing slits and spatially connect the openings 34A to 34D to the outside of the spacer 30.

The first electrode sheet 10 and the second electrode sheet 20 overlap each other with the spacer 30 interposed therebetween, and are integrated with each other by the adhesive coated on both surfaces of the spacer 30, thereby obtaining the seat occupancy sensor 3 illustrated in FIG. 14.

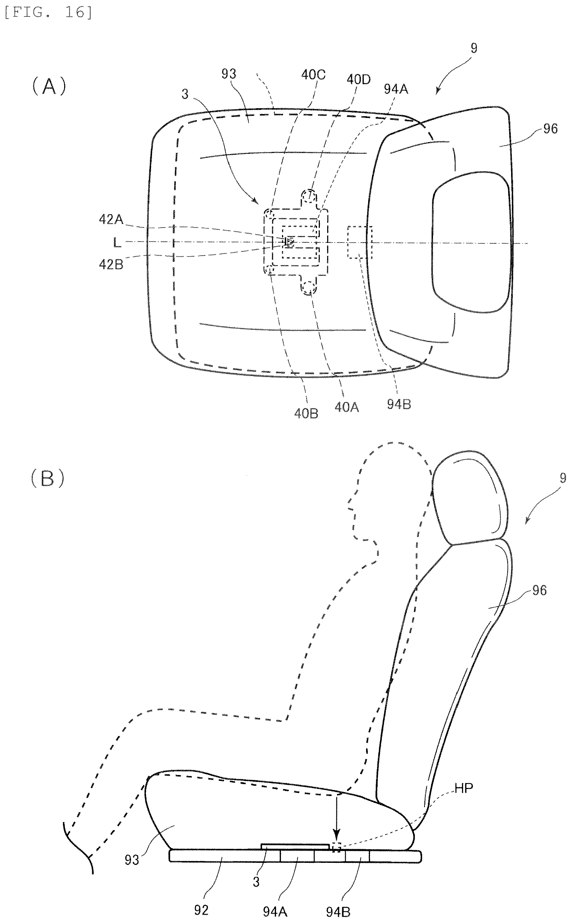

FIG. 16 is a diagram illustrating a state of the seat device according to the third embodiment of the invention. Specifically, FIG. 16A is a diagram illustrating a state where the seat device 9 provided with the seat occupancy sensor 3 is viewed from the upside, and FIG. 16B is a diagram illustrating a state where the seat device 9 provided with the seat occupancy sensor 3 is viewed from the lateral side.

As illustrated in FIG. 16, the seat occupancy sensor 3 is disposed on the seat pan 92 while the hole 94A of the seat pan 92 is positioned inside the opening of the seat occupancy sensor 3, and is interposed between the seat pan 92 and the cushion pad 93.

The pressure sensitive switches 40A to 40D of the seat occupancy sensor 3 are respectively disposed at the front side of the hip point HP. The pressure sensitive switches 40A and 40D are arranged in the width direction of the cushion pad with the hole 94A interposed therebetween, and are bilaterally symmetrical to each other about the center line L that passes through the center of the cushion pad 93 in the width direction and is parallel to the front to rear direction. Further, the pressure sensitive switches 40B and 40C are arranged in the width direction of the cushion pad 93 at the front side of the hole 94A, and are bilaterally symmetrical about the center line L.

In the embodiment, the pressure sensitive switches 40B and 40C are disposed in a region 92A (FIG. 9) which receives the largest pressure from the cushion pad 93, and the pressure sensitive switches 40A and 40D are disposed in a region 92B (FIG. 9) which receives a pressure smaller than that of the region 92A. Further, the pressure sensitive switches 40A and 40D include the openings 34A and 34D of which the diameters are larger than those of the pressure sensitive switches 40B and 40C. Accordingly, the pressure sensitive switches 40B and 40C are pressed by a large force compared to the pressure sensitive switches 40A and 40D.

Furthermore, the diameters of the openings 34B and 34C of the pressure sensitive switches 40B and 40C are smaller than those of the openings 34A and 34D of the pressure sensitive switches 40A and 40D. For this reason, even when the respective pressure sensitive switches 40A to 40D are pressed by the same force, the pressure sensitive switches 40B and 40C are pressed by a large force compared to the pressure sensitive switches 40A and 40D.

As described above, in the seat occupancy sensor 3 of the embodiment, the openings 34B and 34C of the pressure sensitive switches 40B and 40C are smaller than the openings 34A and 34D of the pressure sensitive switches 40A and 40D. For this reason, the insulating sheets 11 and 21 of the pressure sensitive switches 40B and 40C are not easily warped compared to the pressure sensitive switches 40A and 40D, and the pressure sensitive switches 40B and 40C are not easily turned on compared to the pressure sensitive switches 40A and 40D.

Incidentally, the pressure which is applied from the cushion pad 93 to the seat pan 92 when the person sits on the seat device decreases as it moves away from the center line L. Since the pressure sensitive switches 40B and 40C are disposed near the center line L in relation to the pressure sensitive switches 40A and 40D, the pressure sensitive switches 40B and 40C are disposed at a place where the pressure sensitive switches 40B and 40C receive the large pressure compared to the pressure sensitive switches 40A and 40D.

That is, the pressure sensitive switches 40B and 40C which are not easily turned on are disposed at a place where the pressure sensitive switches are pressed by a large pressure, and the pressure sensitive switches 40A and 40D which are easily turned on are disposed at a place where the pressure sensitive switches are pressed by a small pressure. Accordingly, the easiness of turning on the respective pressure sensitive switches 40A to 40D and a variation in the pressure applied from the cushion pad 93 to the seat pan 92 are offset to each other. As a result, the sitting of the person may be appropriately detected.

Furthermore, in the embodiment, the first electrodes 14A to 14D of the pressure sensitive switches 40A to 40D are formed as the comb electrodes of the second embodiment, and the pressure sensitive switches 40A to 40D may have the same configuration as that of the second embodiment.

### (Fourth embodiment)

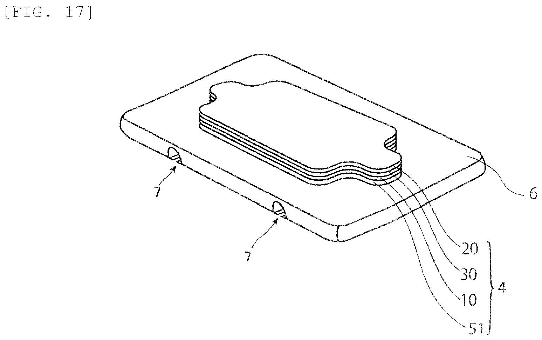

Next, a fourth embodiment of the invention will be described in detail by referring to FIGS. 17 to 20. Furthermore, the same reference numerals will be given to the same or equivalent components to those of the first embodiment, and the description thereof will not be repeated, unless otherwise particularly described.

FIG. 17 is a plan view illustrating a seat occupancy sensor according to the fourth embodiment of the invention. As illustrated in FIG. 17, in the embodiment, a seat occupancy sensor 4 and the pedestal 6 are provided as main components. The seat occupancy sensor 4, for example, has the same configuration as that of the seat occupancy sensor 1 of the first embodiment, the seat occupancy sensor 2 of the second embodiment, or the seat occupancy sensor 3 of the third embodiment. Furthermore, the shape of the seat occupancy sensor 4 illustrated in FIG. 17 is depicted as a shape different from that of any one of the seat occupancy sensors of the first embodiment to the third embodiment for convenience of description.

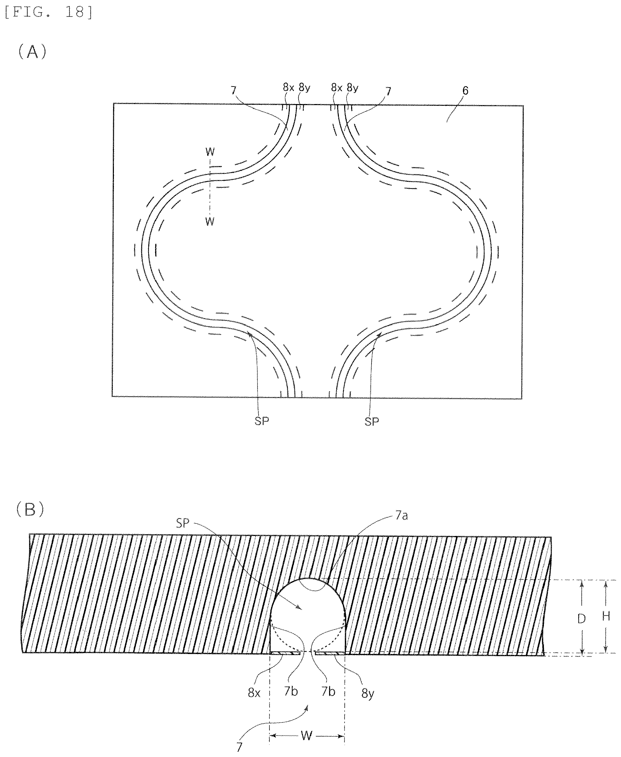

FIG. 18 is a plan view and a cross-sectional view illustrating a pedestal. Specifically, FIG. 18A is a plan view illustrating a state where the pedestal is viewed from one surface and FIG. 18B is a diagram illustrating a state of a cross-section taken along the line W-W of FIG. 18A.

As illustrated in FIG. 18A, the pedestal 6 is a member that is attachable to and detachable from a part of two springs laid across the seat frame and places the seat occupancy sensor 4 above the spring. In the case of the embodiment, the pedestal 6 is formed as a flexible resinous plate, and one wide surface of the pedestal 6 is provided with the cushion member 51 (FIG. 17) of the seat occupancy sensor 4 through an adhesive. Further, grooves 7 are formed in one surface of the pedestal 6 opposite to the installation side of the cushion member 51.

The grooves 7 are formed with spaces SP into which the respective portions of two springs laid across the seat frame are fitted. The direction of forming each groove 7 of the embodiment is formed so as to correspond to the direction of forming each of two spring portions laid across the seat frame so as to be adjacent to each other, and both ends of the groove 7 are opened to the side surfaces of the pedestal 6. Accordingly, the groove 7 may cause the spring portion in the middle of the spring provided along the bottom surface of the cushion pad to be fitted to one surface of the pedestal 6, and hence the spring portion may be intuitively recognized by the direction of forming the groove 7 formed in the pedestal 6.

As illustrated in FIG. 18B, a bottom portion 7a of the vertical cross-section of the groove 7 is formed in the same shape as the semi-circular-shape of the vertical cross-section of the spring as the attachment subject. For this reason, the groove 7 may be fitted to a part of the spring laid across the seat frame without forming a gap between the surface of the bottom portion 7a and the spring as the attachment subject.

Further, the side portions 7b of the groove 7 are formed in parallel to each other, and the distance (groove width) W therebetween is formed so as to be approximately equal to the diameter of the spring as the attachment subject. The depth D of the groove 7 is formed as a depth which is larger than the diameter of the spring as the attachment subject. For this reason, the groove 7 regulates the movement of the spring in the groove width direction. As a result, it is possible to remarkably reduce the rolling of the pedestal 6 which is disposed above the spring laid across the seat frame by the groove 7.

Moreover, the edges of the groove 7 in the length direction are connected with a pair of convex portions 8x and 8y which protrudes into the space SP of the groove 7. The convex portions 8x and 8y are formed as a flexible resinous plate, and face each other while being away for the same distance from the center of the groove 7 in the length direction. One wide surface of the convex portions 8x and 8y is flush with the wide surface of the pedestal 6 provided with the groove 7. Further, the height H between the farthest protruding position toward the groove 7 side in the convex portions 8x and 8y and the lowest position of the groove 7 is set to be smaller than the diameter of the spring. For this reason, the force in which the convex portions 8x and 8y return to the original shape serves as the force for suppressing the spring portion fitted into the groove 7. As a result, the convex portions 8x and 8y may largely reduce the amount in which the spring portion is separated from the groove 7.

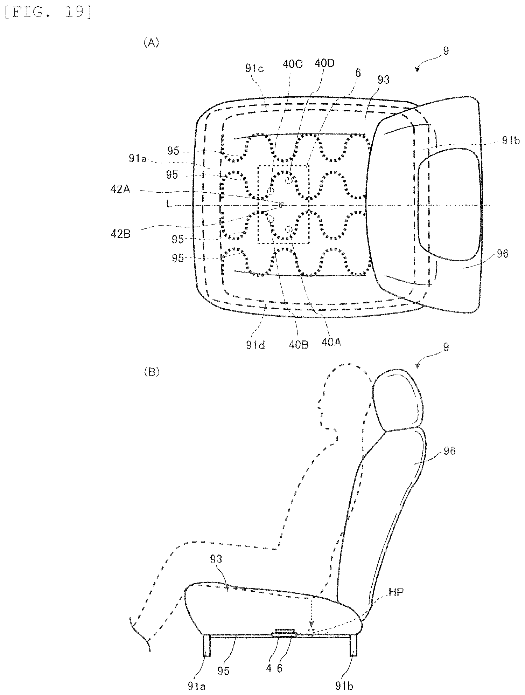

FIG. 19 is a diagram illustrating a state of the seat device according to the fourth embodiment of the invention. Specifically, FIG. 19A is a diagram illustrating a state where the seat device 90 provided with the seat occupancy sensor 4 is viewed from the upside, and FIG. 19B is a diagram illustrating a state where the seat device 90 provided with the seat occupancy sensor 4 is viewed from the lateral side. Furthermore, FIG. 19 illustrates the pressure sensitive switches 40A to 40D of the seat occupancy sensor 3 of the third embodiment for convenience of description.

As illustrated in FIG. 19, the seat device 90 mainly includes a seat frame 91, a plurality of springs 95, the seat occupancy sensor 4, and the cushion pad 93 and the backrest 96 having the same configurations as those of the first embodiment.

The seat frame 91 is formed as a frame structure including a front frame member 91a which is disposed as a frame of a front portion, a rear frame member 91b which is disposed as a frame of a rear portion, and a pair of side frame members 91c and 91d which are disposed as frames of the left and right portions. Further, the seat frame 91 includes an opening which is surrounded by the members 91a to 91d. The front frame member 91a and the side frame members 91c and 91d are formed as, for example, a product obtained by press-molding a sheet metal. The rear frame member 91b is formed as, for example, a metal pipe having a circular cross-section, and extends in the width direction of the vehicle, so that both ends thereof are connected to the rear ends of the side frame members 91c and 91d.

The plurality of springs 95 are support members that support the cushion pad 93, and are laid across the seat frame 91 while being away from one another by a predetermined gap. In the embodiment, each spring 95 is formed as a wire which repeatedly meanders in an S-shape on the same plane, where the front end of the spring 95 is attached to the front frame member 91a and the rear end of each spring 95 is attached to the rear frame member 91b.

Furthermore, the spring 95 is not limited to the S-shape, and may be formed in, for example, a Z-shape. A wire which meanders in various shapes may be employed, and a wire which meanders in a shape obtained by the combination of a plurality of shapes may be employed. Further, the spring 95 may be a wire which repeatedly and continuously meanders in one or plural shapes, a wire which meanders in one or plural shapes at a predetermined interval, and a wire which does not meander so as to be straight. Moreover, the plurality of springs 95 of the embodiment are provided across the front to rear direction, but may be provided across the left to right direction or the inclined direction.

The pedestal 6 which places the seat occupancy sensor 4 thereon is disposed on the spring 95, and is interposed between the spring 95 and the cushion pad 93. A method of disposing the seat occupancy sensor 4 on the spring 95 is that the pedestal 6 is press-inserted while the spring portion corresponding to the groove 7 of the spring 95 abuts against the convex portions 8x and 8y connected to the edges of the groove 7 in the length direction. Then, since the convex portions 8x and 8y have flexibility, the opening ends of the convex portions 8x and 8y are warped to the inside of the groove 7, and the spring portion enters the groove 7. In this way, the pedestal 6 is disposed on the spring 95 and the cushion pad 93 is disposed. Accordingly, the seat occupancy sensor 1 is disposed below the cushion pad 93 so as to receive the pressure from the cushion pad 93, and is interposed between the pedestal 6 and the cushion pad 93.

The pressure sensitive switches 40A to 40D of the seat occupancy sensor 4 are respectively disposed at the front side of the hip point HP. The pressure sensitive switches 40A and 40D are arranged in the width direction of the cushion pad so as to avoid the position present above the spring 95 in the vertical direction, and are formed so as to be bilaterally symmetrical to each other about the center line L. Further, the pressure sensitive switches 40B and 40C are arranged in the width direction of the cushion pad 93 at the front side of the pressure sensitive switches 40A and 40D so as to be present at the position above the spring 95 in the vertical direction, and are formed so as to be bilaterally symmetrical to each other about the center line L.

The terminals 42A and 42B which are connected to the pressure sensitive switches 40A to 40D are electrically connected to a power supply and a measurement unit (not illustrated) at the outside from the lower side of the seat frame 91.

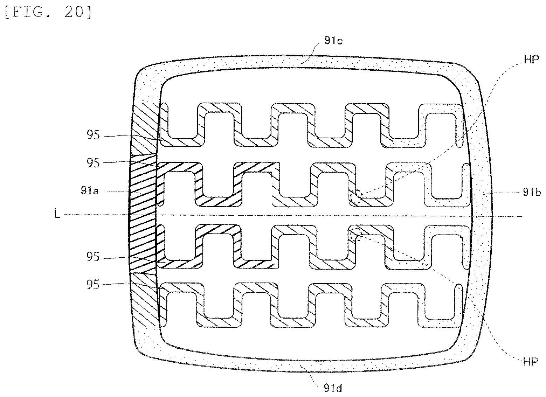

FIG. 20 is a conceptual diagram illustrating a distribution of a load which is applied to the seat frame and the spring through the cushion pad when the person formally sits on the seat device of FIG. 19. Specifically, in FIG. 20, a region receiving the largest pressure from the cushion pad 93 is indicated by the right diagonal line, a region receiving the pressure which is large at the next place is indicated by the left diagonal line, and a region receiving a load which is smaller than the load applied to the region indicated by the right diagonal line and the left diagonal line is indicated by the dot. Furthermore, the right diagonal line is a line which is substantially parallel to the line connecting the right upper position of the drawing paper to the left lower position of the drawing paper, and the left diagonal line is a line which is substantially parallel to the line connecting the left upper position of the drawing paper to the right lower position of the drawing paper.

As illustrated in FIG. 20, the load which is applied to the spring portion and the seat frame portion (the right diagonal line portion) at the front side of the hip point HP increases compared to the spring portion (the left diagonal line portion) near the hip point HP. This is because the load of the hip of the person formally sitting on the seat device and the load of the leg extending forward from the hip are exerted not only in the vertical direction but also in the front direction as in the first embodiment.

As described above, since the pressure sensitive switches 40A to 40D are disposed at the front side of the hip point HP, a large pressure is applied to the pressure sensitive switches 40A to 40D compared to the hip point HP. Accordingly, the respective pressure sensitive switches 40A to 40D may appropriately detect the pressure generated by the sitting of the person when the person formally sits on the seat device.

Furthermore, as in the third embodiment, the pressure sensitive switches 40B and 40C are disposed in the region (the right diagonal line portion) which receives the largest pressure from the cushion pad 93, and the pressure sensitive switches 40A and 40D are disposed in the region (the left diagonal line portion) which receives the pressure that is large at the next place. However, in the case of the embodiment, the pressure sensitive switches 40A to 40D may be respectively disposed in the region (the right diagonal line portion) which receives the largest pressure from the cushion pad 93 or the region (the left diagonal line portion) which receives the pressure that is large at the next place.

As described above, according to the embodiment, the seat occupancy sensor 4 which includes the pressure sensitive switch 40 is disposed at the opposite surface to one surface of the pedestal 6 provided with the groove 7 which is fitted to a part of the spring laid across the seat frame. For this reason, when the predetermined portion of the plurality of spring 95 is fitted into the groove 7, the pressure sensitive switches 40A to 40D may be disposed above the spring 95 through the pedestal 6 even when the diameter of the spring 95 is small or the space between the springs 95 is large. Accordingly, the pressure sensitive switches 40A to 40D may be disposed between the spring 95 and the cushion pad 93 disposed on the spring 95 in a stable state. Furthermore, the pressure sensitive switches 40A to 40D may be disposed in a stable state even when the subject to place the cushion pad 93 thereon is the seat pan 92.

In the case of the embodiment, the pressure sensitive switches 40A and 40D are disposed at a position avoiding the position above the spring 95 in the vertical direction, whereas the pressure sensitive switches 40B and 40C are disposed at a position above the spring 95 in the vertical direction. Accordingly, a force against the pressure applied from the cushion pad 93 increases in the pressure sensitive switches 40B and 40C which are present above the spring in the vertical direction compared to the pressure sensitive switches 40A and 40D which are not present above the spring 95 in the vertical direction. Meanwhile, since the openings 34B and 34C of the pressure sensitive switches 40B and 40C are smaller than the openings 34A and 34D of the pressure sensitive switches 40A and 40D, the pressure sensitive switches 40B and 40C are not easily turned on compared to the pressure sensitive switches 40A and 40D as described above. That is, the pressure sensitive switches 40B and 40C which are not easily turned on are disposed at a position where the pressure sensitive switches are pressed by a large pressure, and the pressure sensitive switches 40A and 40D which are easily turned on are disposed at a position where the pressure sensitive switches are pressed by a small pressure. Accordingly, even when the respective pressure sensitive switches 40A to 40D are disposed at a place where the same pressure is applied from the cushion pad 93, a variation in the easiness of turning on the respective pressure sensitive switches 40A to 40D and the pressure applied to the pressure sensitive switches 40A to 40D may be offset to each other. As a result, the uniformity (balance) in which the respective pressure sensitive switches 40A to 40D are turned on may be improved.

Incidentally, the pressure sensitive switches 40A to 40D have a cross-section larger than the diameter (the groove width of the groove 7) of the spring 95 as a wire. For this reason, there is a tendency that a large force is applied to the portion disposed above the spring 95 in the vertical direction compared to the portion not disposed thereabove in the vertical direction in the pressure sensitive switches 40B and 40C disposed above the spring 95 in the vertical direction. That is, there is a tendency that the distribution of the pressure with respect to one pressure sensitive switch 40B or 40C becomes non-uniform. The tendency noticeably occurs as the diameter of the spring 95 as the wire decreases. On the contrary, since the pressure sensitive switches 40A and 40D are disposed so as to avoid the position above the spring 95 in the vertical direction, the distribution of the pressure of the pressure sensitive switch 40A or 40D becomes roughly uniform. Accordingly, in the pressure sensitive switches 40A and 40D which are disposed to avoid the position above the spring 95 in the vertical direction, degradation in the durability is reduced due to the non-uniform pressure compared to the pressure sensitive switches 40B and 40C disposed above the spring 95 in the vertical direction. Further, since the periphery of the space of laying the spring 95 is roughly blocked so that the ventilation is not satisfactorily performed, heat is easily transferred from the spring 95 which is generally formed of metal. Accordingly, in the pressure sensitive switches 40A and 40D which are disposed so as to avoid the position above the spring 95 in the vertical direction, degradation in the durability with the heating is largely reduced compared to the pressure sensitive switches 40B and 40C disposed above the spring 95 in the vertical direction. Meanwhile, as described above, the force against the pressure applied from the cushion pad 93 becomes larger in the pressure sensitive switches 40B and 40C which are disposed above the spring in the vertical direction compared to the pressure sensitive switches 40A and 40D which are not disposed above the spring 95 in the vertical direction. For this reason, the sensitivities of the pressure sensitive switches 40B and 40C become satisfactory compared to the pressure sensitive switches 40A and 400.

Accordingly, the pressure sensitive switch 40B (40C) which is present at a position above the spring 95 in the vertical direction and the pressure sensitive switch 40A (40D) which is disposed so as to avoid the position are connected to each other so as to configure an OR circuit and the OR circuits are connected in series to each other so as to configure an AND-OR circuit, this is particularly useful. This is because the advantage obtained by disposing the pressure sensitive switch above the spring 95 in the vertical direction and the advantage obtained by disposing the pressure sensitive switch to avoid the position may be both obtained.

Furthermore, since the cushion member 51 is provided at the bottom portion of the seat occupancy sensor 4 of the seat occupancy sensor 4 of the embodiment, it is possible to reduce the non-uniform distribution of the pressure with respect to the pressure sensitive switch 40B or 40C which is present above the spring 95 in the vertical direction.

### (Fifth embodiment)

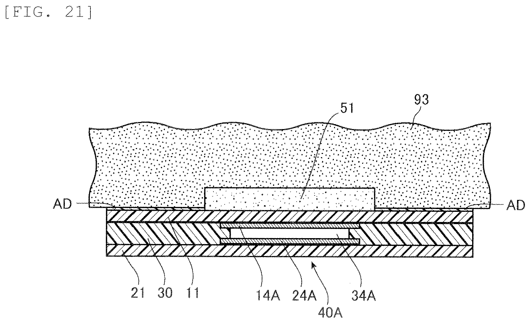

Next, a fifth embodiment of the invention will be described in detail by referring to FIG. 21. Furthermore, the same reference numerals will be given to the same or equivalent components to those of the first embodiment, and the description thereof will not be repeated, unless otherwise particularly described.

FIG. 21 is a diagram illustrating a state of a part of a seat device and a part of a seat occupancy sensor according to a fifth embodiment of the invention. Specifically, FIG. 21 is a diagram illustrating a state in the vicinity of the pressure sensitive switch 40A of the seat occupancy sensor 1. As illustrated in FIG. 21, the seat occupancy sensor 1 of the embodiment is different from the seat occupancy sensor 1 of the first embodiment in that the seat occupancy sensor is bonded and fixed to the bottom surface of the cushion pad 93 by the adhesive AD coated on the surface of the first insulating sheet 11 and is disposed below the cushion pad 93.

Since the cushion pad 93 is provided with a concave portion and the cushion member 51 enters the concave portion, the cushion member 51 may be surrounded by the cushion pad 93 or the cushion member 51 may be surrounded by the cushion pad 93 while the cushion pad 93 is elastically deformed.

In this way, the seat occupancy sensor 1 which is bonded to the lower surface of the cushion pad 93 detects the sitting of the person as below. That is, when the person sits on the seat device, the cushion pad 93 is crushed to be warped downward by the load of the person. At this time, the lower surface of the cushion pad 93 is warped so that a specific portion positioned at the front side of the hip point HP is present at the lowest position. Then, since the seat occupancy sensor 1 which is bonded to the lower surface of the cushion pad 93 receives the pressure from the cushion pad 93, the cushion member 51 which is pressed by the cushion pad 93 is deformed so as to enter the opening 34A of the pressure sensitive switch 40A. Then, the second insulating sheet 21 which is pressed against the cushion member 51 is deformed so as to enter the opening 34A along with the second electrode 24A disposed on the second insulating sheet 21, so that the first electrode 14A contacts the second electrode 24A. In this way, the pressure sensitive switch 40A is turned on. Further, as the lower surface of the cushion pad 93 is warped, the pressure sensitive switch 40A is warped with the warping of the lower surface of the cushion pad 93. That is, the first insulating sheet 11 and the second insulating sheet 21 are warped in the same direction. At this time, the second insulating sheet 21 disposed near the cushion pad 93 is disposed at the inner peripheral side of the warpage in relation to the first insulating sheet 11. Accordingly, the first electrode 14A and the second electrode 24A becomes further close to each other due to the inner and outer peripheral differences of the first insulating sheet 11 and the second insulating sheet 21 in the pressure sensitive switch 40A. As a result, the pressure sensitive switch 40A may be further easily turned on. Further, the other pressure sensitive switches 40B to 40F are also turned on in this way.

According to the seat occupancy sensor 1 and the seat device of the embodiment, since the sitting of the person may be detected without the placement member for displacing the seat occupancy sensor 1 thereon, the configuration of the seat device may be simplified.

Incidentally, where there is no placement member for placing the seat occupancy sensor 1, the lower side of the seat occupancy sensor 1 becomes a space. Since the hardness of the cushion pad 93 is various in response to the type of vehicle, the pressure which is applied from the cushion pad 93 to the seat occupancy sensor 1 changes in response to the type of the cushion pad 93. However, in this case, even when the seat occupancy sensor 1 receives the pressure, the insulating sheet 21 near the space is not warped, but the insulating sheet 11 near the cushion pad 93 is warped. However, in the embodiment, since the cushion member 51 is interposed between the cushion pad 93 and the insulating sheet 11, the cushion member 51 is deformed in the same way regardless of the hardness of the cushion pad 93, and enters the opening 34A of the pressure sensitive switch 40A. Accordingly, even when the cushion pad 93 is comparatively rigid, the insulating sheet may be appropriately warped by the cushion member 51.

Furthermore, in the embodiment, the seat occupancy sensor 1 is fixed to the lower surface of the cushion pad 93 by the bonding of the adhesive AD, but the seat occupancy sensor 1 may be fixed by a different method. For example, the seat occupancy sensor 1 may be fixed to the lower surface of the cushion pad 93 by a plurality of pins penetrating the circumferences of the respective pressure sensitive switches and bitten into the cushion pad 93.

As described above, the invention has been described by exemplifying the first to fifth embodiments, but the invention is not limited thereto.

For example, in the first embodiment and the second embodiment, the number of the pressure sensitive switches is six. However, in the first embodiment or the second embodiment, the number of the pressure sensitive switches may be five or less or seven or more. Meanwhile, in the third embodiment, the number of the pressure sensitive switches is four. However, in the third embodiment, the number of the pressure sensitive switches may be various numbers equal to or larger than two.

Further, in the first embodiment and the second embodiment, an OR circuit is configured by the pressure sensitive switch group including the pressure sensitive switches 40A to 40C and the pressure sensitive switch group including the pressure sensitive switches 40D to 40F. Further, an AND circuit is configured by the pressure sensitive switch group including the pressure sensitive switches 40A to 40C and the pressure sensitive switch group including the pressure sensitive switches 40D to 40F. However, in the first embodiment or the second embodiment, different circuit configurations may be employed as the circuit configurations of the pressure sensitive switches 40A to 40F. For example, an OR circuit may be configured by all the pressure sensitive switches 40A to 40F, and an AND circuit may be configured by all the pressure sensitive switches 40A to 40F by connecting the pressure sensitive switches 40A to 40F in series to one another. Meanwhile, in the third embodiment, an AND circuit is configured by all the pressure sensitive switches 40A to 40D by connecting the pressure sensitive switches 40A to 40D in series to one another. However, in the third embodiment, a different circuit configuration may be employed as the circuit configuration of the pressure sensitive switches 40A to 40D. For example, the pressure sensitive switch group including the pressure sensitive switches 40A and 40B and the pressure sensitive switch group including the pressure sensitive switches 40C and 40D respectively configure an OR circuit, and the pressure sensitive switch groups configure an AND circuit, thereby configuring an AND-OR circuit. Alternatively, the respective pressure sensitive switches 40A to 40D may configure an OR circuit.

Further, the seat occupancy sensors 1 to 3, as the shapes of the first electrode sheet 10, the second electrode sheet, and the spacer 30, the shapes are substantially formed in an H-shape in the first embodiment and the second embodiment, and are substantially formed in a square shape with an opening in the third embodiment. However, as the shapes of the seat occupancy sensors 1 to 3, the first electrode sheet 10, the second electrode sheet, and the spacer 30 of the above-described embodiments, various shapes may be employed. Furthermore, the warpage amount in the unit area about the position pressed by a predetermined pressure is set to be equal in the first insulating sheet 11 and the second insulating sheet 21, but may be set to be different.

Further, in the above-described embodiments, the first and second electrodes of each pressure sensitive switch have the same shape and size and completely overlap each other. However, the first electrode and the second electrode may have different sizes and shapes within the pressure detection range. Further, in the above-described embodiments, the sizes of the first electrode and the second electrode are slightly larger than those of the opening, but may be approximately equal to the size of the opening or slightly smaller than the size of the opening. However, it is preferred that the first electrode and the second electrode be larger than the opening from the viewpoint of improving the sensitivity of the pressure sensitive switch. Further, in the above-described embodiments, the shapes of the first electrode, the second electrode, and the opening are circular shapes, but may be a shape other than the circular shape.

Further, in the third embodiment, as the sizes of the pair of electrodes (the first electrode and the second electrode) and the opening of each pressure sensitive switch, two kinds of sizes are employed so that the large-diameter members (14A, 14D, 24A, 24D, 34A, and 34D) the small-diameter members (14B, 14C, 24B, 24C, 34B, and 34C) are provided, but three kinds or more may be employed.

Further, in the above-described embodiments, the elastic force in the unit area about the position pressed by a predetermined pressure is set to be equal in the cushion member 51 and the cushion pad 93, but may be set to be different. For example, in the seat device 9, the elastic force of the cushion member 51 may be set to be weaker than the elastic force of the cushion pad 93. In this case, according to the seat device 9, it is possible to suppress the vibration generated from the seat pan 92 from being transmitted to the pressure sensitive switch by the cushion member 51 of which the elastic force is weaker than that of the cushion pad 93. Accordingly, the pressure sensitive switch may be further stably operated and the sitting of the person may be stably detected. Alternatively, in the seat device 9, the elastic force of the cushion member 51 may be set to be stronger than the elastic force of the cushion pad 93. In this case, according to the seat device 9, the cushion pad 93 is further contracted compared to the cushion member 51 when the person sits on the seat device, and the contraction of the cushion member 51 is suppressed. For this reason, it is possible to suppress a decrease in distance from the seat pan 92 to each pressure sensitive switch. Accordingly, since the heat transmitted from the seat pan 92 to each pressure sensitive switch may be further absorbed by the cushion member 51, it is possible to suppress a change in pressure necessary for turning on the pressure sensitive switch in accordance with the temperature, and hence to suppress a change in load for detecting the sitting in accordance with the temperature.

Further, in the above-described embodiments, the crushing thickness of the cushion member 51 is set to be a half or more of the distance between the facing electrodes in each pressure sensitive switch, but may be shorter than a half of the distance between the facing electrodes in each pressure sensitive switch.

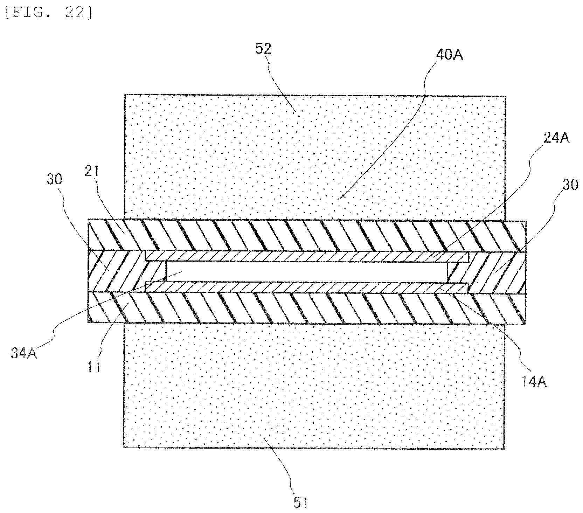

Further, in the above-described embodiments, the cushion member 51 is provided only in the first insulating sheet 11, but the cushion member may be provided in both the first insulating sheet 11 and the second insulating sheet 21. For example, in the seat occupancy sensor illustrated in FIG. 22, the cushion member 51 as the first cushion member is provided at the opposite side to the spacer 30 of the first insulating sheet 11. Meanwhile, the cushion member 52 as the second cushion member is provided at the opposite side to the spacer 30 of the second insulating sheet 21. When a load caused by the sitting is applied to the cushion members 51 and 52, the respective cushion members 51 and 52 are deformed so as to be crushed by the load, and appropriately warp the respective insulating sheets 11 and 21 by the elastic forces so that the respective insulating sheets enter the opening 34A of the spacer 30. If the respective insulating sheets 11 and 21 are warped in this way, even when the seat occupancy sensor is disposed on the member that is not deformed by the load, a result may be obtained in a case where the seat occupancy sensor is disposed on the member that is deformed by the load. Accordingly, when both the first insulating sheet 11 and the second insulating sheet 21 are provided with the cushion member, it is possible to prevent a problem in which the sitting detection load is different in response to the place to dispose the seat occupancy sensor therein. Further, since the cushion member 51 or 52 has a property in which the cushion member may be changed in accordance with the situation, the respective insulating sheets 11 and 21 may be appropriately warped even when a gap is formed between the cushion member 51 or 52 and the member facing the cushion member 51 or 52. Furthermore, the elastic force in the unit area based on the position pressed by a predetermined pressure or the crushing thickness of the cushion member may be equal or different between the cushion members 51 and 52. Further, in the third embodiment and the fourth embodiment, the cushion member 51 or 52 is not essentially needed.

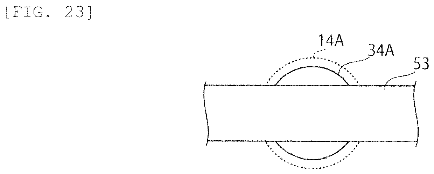

Further, in the first embodiment and the second embodiment (third embodiment), the cushion member 51 is employed which covers the openings 34A to 34F (34A to 34D) in the spacer 30 through the first insulating sheet 11 as a whole. However, a cushion member for covering each of the openings 34A to 34F (34A to 34D) may be employed. The same applies to the cushion member 52. Further, the cushion member 51 or 52 is employed which covers the entire opening, but for example, as illustrated in FIG. 23, a cushion member 53 which covers a part of the openings 34A to 34F (34A to 34D) may be employed. Alternatively, although it is not illustrated in the drawings, a cushion member may be employed which covers a part of the openings 34C and 34F (34A and 34D) and covers the other entire openings. That is, a cushion member may be employed which covers at least a part of the respective openings 34A to 34F through the first insulating sheet 11. Furthermore, the sensitivities of the pressure sensitive switches the pressure sensitive switches 40A to 40F (40A to 40D) may be adjusted by setting the ratio (the blockage amount of the cushion member with respect to the opening) in which the cushion member covers the opening to be different for each of different openings. For example, the entire opening of any one of the pressure sensitive switch with a large opening and the pressure sensitive switch with a small opening is covered by the cushion member, and a part of the other opening is covered by the cushion member. In this way, even when there is a limitation in the place for disposing the pressure sensitive switches 40A to 40F (40A to 40D), it is possible to improve the uniformity (balance) in which the respective pressure sensitive switches 40A to 40F (40A to 40D) are turned on.

Further, in the first embodiment to the third embodiment, the seat occupancy sensors 1 to 3 are placed on the seat pan 92, and in the fourth embodiment, the seat occupancy sensor 4 is placed on the pedestal 6. However, the placement member on which the seat occupancy sensors 1 to 3 are placed is not limited to the above-described embodiments. For example, the seat frame 91 may be employed. Specifically, the seat occupancy sensor may be placed on the upper surface of the front frame member 91a, the rear frame member 91b, the side frame member 91c, or the side frame member 91d. Furthermore, as illustrated in FIG. 20, in these members 91a to 91d, the upper surface of the front frame member 91a receives the largest pressure from the cushion pad 93. For this reason, it is preferred that the upper surface of the front frame member 91a be set as a place for disposing the seat occupancy sensors 1 to 3 from the viewpoint of improving the sensitivity of the pressure sensitive switch. Incidentally, when the number of the pressure sensitive switches to be disposed on the seat surface of the pedestal 6 is large, there is a tendency that the pedestal 6 increases in size, and hence there is an increasing possibility that the cushion performance of the cushion pad 93 may be degraded as the pedestal 6 increases in size. It is preferred that the upper surface of the seat pan 92 or the seat frame 91 be set as a place for disposing the seat occupancy sensors 1 to 3 from the viewpoint of avoiding such a possibility regardless of the number of the pressure sensitive switches.

Further, in the fourth embodiment, the pedestal 6 is employed which may be supported by two springs 95, but a pedestal may be employed which may be supported by the curved portion of one spring 95. As the pedestal, for example, a pedestal obtained by cutting the center of the pedestal 6 illustrated in FIG. 18A in the length direction may be exemplified.

Further, in the fourth embodiment, the pedestal 6 is employed which places the seat occupancy sensor 4 above the spring 95, but a pedestal may be employed which places the seat occupancy sensor below the spring 95. For example, a pedestal may be exemplified in which the seat surface of the seat is provided with the grooves 7, the grooves 7 are fitted to a part of two springs 95 from the downside, and the seat occupancy sensor is placed below two springs 95. In a case where such a pedestal is employed, the pressure sensitive switch may be disposed between the adjacent springs, and may be disposed directly below the spring.

Furthermore, the components of the seat occupancy sensor or the seat device of the invention may be appropriately combined with one another other than the above-described embodiments.

### Industrial Applicability

According to the invention, provided are the seat occupancy sensor capable of appropriately detecting the sitting of the person while preventing the discomfort caused by the seat occupancy sensor and the seat device using the same.

### Description of Reference Numerals

- 1 to 4: seat occupancy sensor
- 6: pedestal
- 7: groove
- 8x, 8y: convex portion
- 9, 90: seat device
- 10: first electrode sheet
- 11: first insulating sheet
- 14A to 14F: first electrode
- 16A to 16M: first wire
- 20: second electrode sheet
- 21: second insulating sheet
- 24A to 24F: second electrode
- 26A to 26E: second wire
- 30: spacer
- 34A to 34F: opening
- 36A to 36F: slit
- 40A to 40F: pressure sensitive switch
- 42A, 42B: terminal
- 51 to 53: cushion member
- 91: seat frame
- 92: seat pan
- 93: cushion pad
- 94A, 94B: hole
- 95: spring
- 96: backrest

## Claims

1. A seat occupancy sensor (1) which is disposed below a cushion pad (93) of a seat (9), the seat occupancy sensor comprising:
a pair of flexible insulating sheets (11, 21);
a sheet-like spacer (30) which is interposed between the pair of insulating sheets (11, 21) and is provided with at least one opening (34A);
a pair of electrodes (14A, 24A) which is provided on the respective surfaces of the pair of insulating sheets (11, 21) and faces each other through the opening (34A); and
a cushion member (51) which is provided at the opposite side to the spacer (30) in at least one of the pair of insulating sheets (11, 21) and covers at least a part of the opening (34A) through the insulating sheet (11),
the cushion member (51) falls within an outer periphery of the pair of insulating sheets (11,21).

2. The seat occupancy sensor (1) according to claim 1,
wherein the cushion member (51) is disposed to as to cover a part of the opening (34A) without covering an entire opening when viewed in a direction perpendicular to the spacer (30).

3. The seat occupancy sensor (1) according to claim 1 or 2,
wherein a crushing thickness of the cushion member (51) is a half or more of a distance between the pair of electrodes (14A, 24A).

4. The seat occupancy sensor according to any one of claims 1 to 3,
wherein the cushion member (51) includes:
a first cushion member that is provided on the opposite surface to the spacer side surface of any one insulating sheet (11) of the pair of insulating sheets (11, 21) and covers at least a part of the opening (34A) through the insulating sheet (11); and
a second cushion member which is provided on the opposite surface to the spacer side surface of the insulating sheet (11) without the first cushion member and covers at least a part of the opening (34A) through the insulating sheet (11).

5. The seat occupancy sensor (3) according to any one of claims 1 to 4,
wherein the spacer (30) is provided with the openings (34B) having at least two kinds or more of sizes.

6. The seat occupancy sensor (3) according to claim 5,
wherein a ratio in which the cushion member (51) covers the opening (34B) is different for each of different kinds of the openings (34A).

7. A seat device (9) comprising:
the seat occupancy sensor (1, 2, 3) according to any one of claims 1 to 6; and a cushion pad (93).

8. The seat device (9) according to claim 7, further comprising:
a placement member that is provided below the cushion pad (93) and places the seat occupancy sensor (1) thereon,
wherein the seat occupancy sensor (1) is disposed between the placement member and the cushion pad (93) while the cushion member (51) is interposed between the placement member and the insulating sheet (11).

9. The seat device (9) according to claim 8,
wherein the placement member is a seat pan (92) which supports the cushion pad (93), and the cushion member is interposed between an upper surface of the seat pan (92) and the insulating sheet (11).

10. The seat device (9) according to claim 8,
wherein the placement member is a pedestal (6) which is attachable to and detachable from a part of a plurality of springs (95) laid across a seat frame (91) and places the seat occupancy sensor (1) above the spring (95), and the cushion member (51) is interposed between a seat surface of the pedestal (6) and the insulating sheet(11).

11. The seat device (9) according to claim 8,
wherein the placement member is a seat frame (91) across which a plurality of springs (95) are laid, and the cushion member (51) is interposed between an upper surface of the seat frame (91) and the insulating sheet (11).

12. The seat device (9) according to claim 7,
wherein an elastic force of the cushion member (51) is weaker than an elastic force of the cushion pad (93).

13. The seat device (9) according to claim 7,
wherein the cushion member (51) has the same elastic force as that of the cushion pad (93).

14. The seat device (9) according to claim 13,
wherein the cushion member (51) and the cushion pad (93) are formed of the same material.

15. The seat device (9) according to claim 7,
wherein an elastic force of the cushion member (51) is stronger than an elastic force of the cushion pad (93).

## Patentansprüche

1. Ein Sitzbelegungssensor (1), der unterhalb eines Sitzkissens (93) eines Sitzes (9) angeordnet ist, der Sitzbelegungssensor weist auf:
ein Paar von flexiblen Isolierlagen (11, 21), einen lagenartigen Abstandshalter (30), der zwischen das Paar von Isolierlagen (11, 21) gesetzt ist und der zumindest eine Öffnung (34A) hat, ein Paar von Elektroden (14A, 24A), die an den entsprechenden Oberflächen des Paars der Isolierlagen (11, 21) vorgesehen sind und in Angesicht zueinander durch die Öffnung (34A) stehen, und ein Kissenglied (51), das an der gegenüberliegenden Seite des Abstandshalters (30) bei zumindest einem des Paars der Isolierlagen (11, 21) vorgesehen ist und zumindest einen Teil der Öffnung (34A) durch die Isolierlage (11) bedeckt, das Kissenglied (51) fällt in eine äußere Umgebung des Paars der Isolierlagen (11, 21).

2. Der Sitzbelegungssensor (1) gemäß Anspruch 1, wobei das Kissenglied (51) so vorgesehen ist, dass dieses einen Teil der Öffnung (34A) bedeckt, ohne eine gesamte Öffnung zu bedecken, betrachtet in einer Richtung rechtwinklig zu dem Abstandshalter (30).

3. Der Sitzbelegungssensor (1) gemäß Anspruch 1 oder 2, wobei eine gedrückte Dicke des Kissenglieds (51) die Hälfte oder mehr einer Distanz zwischen den Elektroden (14A, 24A) beträgt.

4. Der Sitzbelegungssensor (1) gemäß einem der Ansprüche 1 bis 3, wobei das Kissenglied (51) beinhaltet: ein erstes Kissenglied, das an der gegenüberliegenden Fläche der Abstandshalter-seitigen Oberfläche von einem der Isolierlagen (11) des Paars der Isolierlagen (11, 21) bereitgestellt ist und zumindest einen Teil der Öffnung (34A) durch die Isolierlage (11) bedeckt, und ein zweites Kissenglied, das an der gegenüberliegenden Oberfläche der Abstandshalter-seitigen Oberfläche der Isolierlage (11) vorgesehen ist, ohne das erste Kissenglied und zumindest einen Teil der Öffnung (34A) durch die Isolierlage (11) bedeckt.

5. Der Sitzbelegungssensor (3) gemäß einem der Ansprüche 1 bis 4, wobei der Abstandshalter (30) mit den Öffnungen (34B) versehen ist, die zumindest zwei Arten oder mehr Größen haben.

6. Der Sitzbelegungssensor (3) gemäß Anspruch 5, wobei ein Verhältnis, mit dem das Kissenglied (51) die Öffnung (34B) bedeckt unterschiedlich für jede Art der Öffnungen (34A) ist.

7. Eine Sitzvorrichtung (9) aufweisend: den Sitzbelegungssensor (1, 2, 3) gemäß einem der Ansprüche 1 bis 6, und ein Sitzkissen (93).

8. Die Sitzvorrichtung (9) gemäß Anspruch 7, weiter aufweisend:
ein Platzierglied, das unterhalb des Sitzkissens (93) bereitgestellt ist und den Sitzbelegungssensor (1) daran platziert, wobei der Sitzbelegungssensor (1) zwischen dem Platzierglied und dem Sitzkissen (93) vorgesehen ist, während das Kissenglied (51) zwischen dem Platzierglied und der Isolierlage (11) gesetzt ist.

9. Die Sitzvorrichtung (9) gemäß Anspruch 8, wobei das Platzierglied eine Sitzschale (92) ist, die das Sitzkissen (93) unterstützt, und das Kissenglied zwischen eine obere Fläche der Sitzschale (92) und der Isolierlage (11) gesetzt ist.

10. Die Sitzvorrichtung (9) gemäß Anspruch 8, wobei das Platzierglied ein Podest (6) ist, das anbringbar und abnehmbar von einem Teil einer Vielzahl von Federn (95) ist, die quer in einem Sitzrahmen (91) liegen und den Sitzbelegungssensor (1) oberhalb der Feder (95) platziert, und das Kissenglied (51) zwischen eine Sitzoberfläche des Podests (6) und der Isolierlage (11) gesetzt ist.

11. Die Sitzvorrichtung (9) gemäß Anspruch 8, wobei das Platzierglied ein Sitzrahmen (91) ist, in den eine Vielzahl von Federn (95) gelegt sind, und das Kissenglied (51) zwischen eine obere Fläche des Sitzrahmens (91) und der Isolierlage (11) gesetzt ist.

12. Die Sitzvorrichtung (9) gemäß Anspruch 7, wobei eine elastische Kraft des Kissenglieds (51) schwächer ist als eine elastische Kraft des Sitzkissens (93).

13. Die Sitzvorrichtung (9) gemäß Anspruch 7, wobei das Kissenglied (51) die gleiche elastische Kraft wie das Sitzkissen (93) hat.

14. Die Sitzvorrichtung (9) gemäß Anspruch 13, wobei das Kissenglied (51) und das Sitzkissen (93) aus dem gleichen Material geformt sind.

15. Die Sitzvorrichtung (9) gemäß Anspruch 7, wobei eine elastische Kraft des Kissenglieds (51) stärker ist als eine elastische Kraft des Sitzkissens (93).

## Revendications

1. Capteur d'occupation de siège (1) qui est disposé sous un rembourrage (93) d'un siège (9), Capteur d'occupation de siège comprenant:
une paire de feuilles isolantes souples (11, 21);
une entretoise en forme de feuille (30) qui est interposée entre la paire de feuilles isolantes (11, 21) et qui est munie d'au moins une ouverture (34A);
une paire d'électrodes (14A, 24A) qui est prévue sur les surfaces respectives de la paire de feuilles isolantes (11, 21) et qui se font face l'une l'autre à travers l'ouverture (34A); et un élément de rembourrage (51) qui est prévu du côté opposé à l'entretoise (30) dans au moins une de la paire de feuilles isolantes (11, 21) et qui couvre au moins une partie de l'ouverture (34A) à travers la feuille isolante (11),
l'élément de rembourrage (51) se trouve à l'intérieur d'une périphérie extérieure de la paire de feuilles isolantes (11,21).

2. Capteur d'occupation du siège (1) selon la revendication 1,
dans lequel l'élément de rembourrage (51) est disposé de manière à couvrir une partie de l'ouverture (34A) sans couvrir une ouverture entière lorsqu'il est vu dans une direction perpendiculaire à l'entretoise (30).

3. Capteur d'occupation du siège (1) selon les revendications 1 ou 2,
dans lequel l'épaisseur d'écrasement de l'élément de rembourrage (51) est égale à la moitié ou plus de la distance entre la paire d'électrodes (14A, 24A).

4. Capteur d'occupation du siège selon l'une quelconque des revendications 1 à 3, dans lequel l'élément de rembourrage (51) comprend:
un premier élément de rembourrage qui est prévu sur la surface opposée à la surface du côté entretoise de l'une quelconque des feuilles isolantes (11) de la paire de feuilles isolantes (11, 21) et qui couvre au moins une partie de l'ouverture (34A) à travers la feuille isolante (11); et
un second élément de rembourrage qui est prévu sur la surface opposée à la surface du côté entretoise de la feuille isolante (11) sans le premier élément de rembourrage et qui couvre au moins une partie de l'ouverture (34A) à travers la feuille isolante (11).

5. Capteur d'occupation du siège (3) selon l'une quelconque des revendications 1 à 4,
dans lequel l'entretoise (30) est pourvue d'ouvertures (34B) ayant au moins deux types ou plus de tailles.

6. Capteur d'occupation du siège (3) selon la revendication 5,
dans lequel un rapport dans lequel l'élément de rembourrage (51) couvre l'ouverture (34B) est différent pour chacun des différents types d'ouvertures (34A).

7. Dispositif de type siège (9) comprenant :
un capteur d'occupation du siège (1, 2, 3) selon l'une quelconque des revendications 1 à 6; et
un rembourrage (93).

8. Dispositif de type siège (9) selon la revendication 7, comprenant en outre:
un élément de positionnement qui est prévu sous le rembourrage (93) et qui place le capteur d'occupation du siège (1) sur celui-ci,
dans lequel le capteur d'occupation du siège (1) est disposé entre l'élément de placement et le rembourrage (93) tandis que l'élément de rembourrage (51) est interposé entre l'élément de placement et la feuille isolante (11).

9. Dispositif de type siège (9) selon la revendication 8,
dans lequel l'élément de placement est une cuvette de siège (92) qui supporte le rembourrage (93) et l'élément de rembourrage est interposé entre une surface supérieure de la cuvette de siège (92) et la feuille isolante (11).

10. Dispositif de type siège (9) selon la revendication 8,
dans lequel l'élément de placement est un piédestal (6) qui peut être fixé à et détaché d'une partie d'une pluralité de ressorts (95) disposés en travers d'un cadre de siège (91) et qui place le capteur d'occupation du siège (1) au-dessus du ressort (95), et l'élément de rembourrage (51) est interposé entre une surface de siège du piédestal (6) et la feuille isolante (11).

11. Dispositif de type siège (9) selon la revendication 8,
dans lequel l'élément de placement est un cadre de siège (91) sur lequel sont disposés plusieurs ressorts (95), et l'élément de rembourrage (51) est interposé entre une surface supérieure du cadre de siège (91) et la feuille isolante (11).

12. Dispositif de type siège (9) selon la revendication 7,
dans lequel une force élastique de l'élément de rembourrage (51) est plus faible qu'une force élastique du rembourrage (93).

13. Dispositif de type siège (9) selon la revendication 7,
dans lequel l'élément de rembourrage (51) a la même force élastique que celle du rembourrage (93).

14. Dispositif de type siège (9) selon la revendication 13,
dans lequel l'élément de rembourrage (51) et le rembourrage (93) sont formés du même matériau.

15. Dispositif de type siège (9) selon la revendication 7,
dans lequel une force élastique de l'élément de rembourrage (51) est plus forte qu'une force élastique du rembourrage (93).
